# EUROPÄISCHE PATENTSCHRIFT

(11) **EP 3 982 114 B1**
(45) Veröffentlichungstag und Bekanntmachung des Hinweises auf die Patenterteilung: **01.01.2025**
(21) Anmeldenummer: 21000282.0
(22) Anmeldetag: 05.10.2021
(51) Int. Cl.: G01N 23/02, B01L 9/00, G01B 5/00, G01B 5/28, G01B 11/24, G01B 15/04, G01N 21/01

(54) **VERWENDUNG EINER HALTERUNG FÜR EIN ZU UNTERSUCHENDES OBJEKT**
USE OF A HOLDER FOR AN OBJECT TO BE EXAMINED
UTILISATION D'UN SUPPORT POUR UN OBJET À EXAMINER

(30) Priorität: 06.10.2020 DE 102020006104
(43) Veröffentlichungstag der Anmeldung: 13.04.2022
(73) Patentinhaber: Eitel, Veronika, 96178 Pommersfelden (DE)
(72) Erfinder: Eitel, Wolfgang, 96103 Hallstadt (DE)
(74) Vertreter: Küchler, Stefan

(56) Entgegenhaltungen:
- DE-U1- 202016 105 156
- FR-A1- 2 954 900
- GB-A- 1 032 929
- IT-A1- TO20 120 998
- US-A- 5 540 335
- SCHMIDER VOLKER: "PE-Schaum Lochplatte | DE-PACK", 17 January 2018 (2018-01-17), XP055893112, Retrieved from the Internet <URL:https://www.de-pack.de/prd/pe-schaum-lochplatte> [retrieved on 20220217]
- ANONYMOUS: "Styropor-Lochpaletten", 21 April 2009 (2009-04-21), XP055893122, Retrieved from the Internet <URL:http://www.papke.de/media/pdf/Papke-Spezial-4.pdf> [retrieved on 20220217]
- ANONYMOUS: "VersatileBlackFoamTubeRackCR1340.jpg - 2 TinEye search results", 23 December 2008 (2008-12-23), XP055893793, Retrieved from the Internet <URL:https://tineye.com/search/b544f3a51b8223defd506adf617f2c04c664dfe0?sort=score&order=desc&page=1> [retrieved on 20220221]
- ANONYMOUS: "Skoolzy Montessori Sensory Peg Board 34 Piece Set", 3 April 2018 (2018-04-03), XP093061183, Retrieved from the Internet <URL:https://www.amazon.com/Skoolzy-Peg-Board-Set-Preschoolers/dp/B00W8FVMNO/?tag=toynotes128-20&th=1> [retrieved on 20230705]
- ANONYMOUS: "Lacing Colors & Shapes Peg Board Set with Pattern Card", 1 November 2016 (2016-11-01), XP093061185, Retrieved from the Internet <URL:https://www.amazon.co.uk/Lacing-Colors-Shapes-Pattern-Activity/dp/B01GMGIW5A> [retrieved on 20230705]

## Beschreibung

Die Erfindung richtet sich auf die Verwendung einer Vorrichtung zum Halten und/oder Positionieren eines zu messenden und/oder zu untersuchenden Messobjektes an einer Mess- und/oder Untersuchungseinrichtung, insbesondere an einer gewünschten Relativposition relativ zu der Mess- und/oder Untersuchungseinrichtung, vorzugsweise im Rahmen einer Untersuchung oder Vermessung mittels Röntgenstrahlen und/oder Computertomographie, und/oder mittels optischer Messsysteme oder Konturographen oder Rauheitsmessgeräten, die verwendete Vorrichtung umfassend wenigstens eine platten- oder blockförmige Stützeinheit zur Abstützung des Messobjektes, bestehend aus einem Material mit einer spezifischen Dichte von 250 kg/m³ oder weniger, sowie durch wenigstens ein vorzugsweise stabförmiges Anlageelement, woran das zu untersuchende Messobjekt anlegbar ist.

Eine gattungsgemäße Vorrichtung zum Halten und/oder Positionieren eines zu messenden und/oder zu untersuchenden Messobjektes ist in der Patentschrift EP 2 511 667 B1 des Erfinders offenbart, sowie auch in der DE 20 2014 003 439 U1. Insbesondere bei letzterer werden als Anlageelemente zur Fixierung eines zu messenden und/oder zu untersuchenden Messobjektes an einer Stützeinheit bevorzugt Schrauben verwendet, deren Befestigungslöcher probenspezifisch eingebracht werden, vorzugsweise durch Verwendung von Schrauben mit einem vorne spitz zulaufenden Schaft, welche sich ihr Gewinde selbst schneiden können.

Ferner offenbart die DE 20 2013 002 540 U1 eine Vorrichtung zur genauen Positionierung von Biopsienadeln, um im Rahmen einer Biopsie einem Patienten Gewebeproben gezielt aus bestimmten Körperbereichen zu entnehmen. Es handelt sich hierbei um mehrere Lochplatten, die in einem Abstand hintereinander angeordnet sind, so dass ihre Führungslöcher miteinander fluchten. Diese Vorrichtung dient einerseits weder zum Halten noch zum Positionieren eines zu messenden und/oder zu untersuchenden Messobjektes an einer Mess- und/oder Untersuchungseinrichtung und ist daher nicht gattungsgemäß. Außerdem gibt es dabei keine Anlageelemente für ein Messobjekt, sondern nur in jeweils mehreren, miteinander fluchtenden Führungslöchern unterschiedlicher Lochplatten geführte Biopsienadeln, die jedoch an dem Patienten nicht anliegen, sondern in jenen eingestochen werden, und dabei keinen seitlichen Haltekräften unterliegen. Ferner sind die einzelnen Lochplatten vergleichsweise dünn und daher nicht in der Lage, jeweils für sich genommen einen Parallaxefehler zu vermeiden, sondern sie können ihre Führungsaufgabe nur gemeinsam erfüllen, denn die einzelnen Führungslöcher darin dürfen nicht zu eng bemessen sein, um eine möglichst reibungsfreie Bewegung der Biospienadeln zu ermöglichen:

Ein Verfahren zur Untersuchung eines Messobjekts mittels einer Positioniervorrichtung ist aus GB 1 032 929 A bekannt.

Weiterhin sind Spielzeuge wie das "Skoolzy Montessori Sensory Peg Board 34 Piece Set", XP093061183, und das "Lacing Colors & Shapes Peg Board Set with Pattern Card", XP093061185, bekannt, die als Positioniervorrichtung geeignet sind.

Bei Verwendung der daraus bekannten Haltevorrichtungen, oder bei einer generellen Positionierung von Proben, speziell auch bei einer automatischen Bestückung von Untersuchungsgeräten, besteht jedoch manchmal das Bedürfnis, Proben vordefiniert positionieren zu können, und es wäre von Vorteil, für Proben, insbesondere für Proben aus der gleichen Produktreihe, d.h. verschiedene Produkte der gleichen Produktlinie, eine genormte, vorgegebene Positionierungsmöglichkeit unter gleichen Gegebenheiten zu haben, um Proben, insbesondere Produkte aus der selben Produktlinie, unter gleichen Untersuchungsvoraussetzungen vergleichen, untersuchen oder messen zu können, welche bei wiederholten Messungen an verschiedenen Produkten der gleichen Produktlinie eine stets gleiche Positionierung gewährleisten und somit annähernd die gleichen Ergebnisse, Grauwerte in den erzeugten 2D-Bilden abgebildet werden, so dass die Auswertung - insbesondere bei Verwendung eines Computers - vereinfacht werden könnte und vergleichbar ist. Es wäre damit auch leichter, untersuchte Proben in ihrer Positionierung zu dokumentieren, um diese bei wiederkehrender Untersuchung gleich positionieren zu können, um vergleichbare Untersuchungsergebnisse zu bekommen. Hierdurch lassen sich Prozessschwankungen sofort erkennen.

Ferner gibt es auch regalartige Konstruktionen, sogenannte Kohlefasertprme mit mehreren Kohlefaserplatten als Etagen, in welchen Proben übereinander auf den einzelnen Etagen mit Probenträgen positioniert werden können. Ähnlich wie bei Regalen sind die Etagen der Kohlefasertürme starr vorgegeben; die Etagen können weder in ihrer Anzahl noch hinsichtlich ihrer Höhen verstellt werden, und zum Positionieren der Prüflinge müssen diese zusätzlich auf Probenträgen positioniert und dann zusammen mit jenen auf den Etagen positioniert und zentriert werden.

Daraus resultiert das die Erfindung initiierende Problem, eine gattungsgemäße Vorrichtung derart zu verwenden, dass damit zu messende und/oder zu untersuchende Prüflinge, Teile, Proben, Werkstücke oder sonstige Messobjekte insbesondere gleiche, wiederkehrende Prüflinge, Teile, Proben, Werkstücke oder sonstige Messobjekte vordefiniert positioniert werden können, d.h. immer wieder an genau der gleichen Stelle, und/oder mit genau der gleichen Ausrichtung oder Lage positioniert werden können, damit sie insbesondere im Fall einer wiederholten Untersuchung im eingescannten Zustand leichter mit einem zuvor ebenfalls eingescannten Teil oder einem sonstigen Referenzobjekt verglichen werden können und reproduzierbare Ergebnisse erzeugt werden können, wobei die erfindungsgemäß verwendete Vorrichtung eine Anpassung an unterschiedliche Prüflinge, bspw. hinsichtlich der vertikalen Abstände derselben, erlauben sollte, im Gegensatz zu einem Regal mit fix eingestellten Regalböden. Insbesondere wird im Sinne der Erfindung ein Patient nicht als ein durch die zu schaffende Vorrichtung zu positionierendes Messobjekt verstanden. Vielmehr werden darunter nur solche Gegenstände verstanden, die auf einem gattungsgemäßen Stützkörper aus einem Material mit einer spezifischen Dichte von 250 kg/m³ oder weniger, insbesondere von 120 kg/m³ oder weniger, vorzugsweise von 75 kg/m³ oder weniger, bevorzugt von 52 kg/m³, insbesondere von 35 kg/m³ oder weniger, oder gar von 32 kg/m³ oder weniger, ohne Verformung desselben platziert, gehalten und getragen werden können.

Die Lösung dieses Problems gelingt durch die Verwendung eines baukastenartigen Systems, bei welchem der Hauptbestandteil eine Stützeinheit zur Abstützung des Messobjektes ist, bspw. in Form eines Stützblockes oder in Form einer Stützplatte aus einem Material mit einer geringeren Dichte als der Prüfling, insbesondere mit einer spezifischen Dichte von 250 kg/m³ oder weniger, 120 kg/m³ oder weniger, vorzugsweise von 75 kg/m³ oder weniger, bevorzugt von 52 kg/m³, insbesondere von 35 kg/m³ oder weniger, oder gar von 32 kg/m³ oder weniger, wobei die Stützeinheit eine Mehrzahl von in einem eindimensionalen Raster, insbesondere in einem zweidimensionalen Raster angeordneten Löchern oder Vertiefungen zum Einstecken von vorzugsweise stabförmigen Anlageelementen aufweist. Diese vorzugsweise stabförmigen Anlageelemente haben definierte Einsteckeigenschaften, so dass sie im Zusammenwirken mit den Einstecklöchern oder -vertiefungen exakt, d.h. positionsgenau festgelegt werden können, indem die Geometrien und lichten Querschnitte der vorgeformten Einstecklöcher oder Einsteckvertiefungen einerseits sowie die Geometrien und Querschnitte eines darin einzusteckenden Anlageelements oder Einsteckschaftes andererseits derart aufeinander abgestimmt sind, dass sich zwischen beiden Elementen eine permanente Klemmkraft einstellt.

Damit besteht das erfindungsgemäß verwendete Baukastensystem aus wenigstens einer.. Stützeinheit zur unterseitigen Abstützung eines Messobjektes, aus wenigstens einem vorzugsweise stabfömnigen Anlageelement zur seitlichen Abstützung des Messobjektes oder des Prüflings, welcher an vorgegebenen Stellen in einer Stützeinheit einsteckbar ist, sowie bei Bedarf, falls erforderlich, aus wenigstens einem Anlegeelement mit wenigstens einer Ausnehmung, bei welcher ein Anlagestab oder Einsteckschaft wenigstens eine Ausnehmung in wenigstens einem Anlageelernent durchgreift und an vorgegebenen Stellen in einer Stützeinheit einsteckbar ist, um das betreffende Anlageelement an einer oder mehreren vordefinierten Positionen der Stützeinheit festlegen zu können.

Bei der vorliegenden Erfindung sind die erfindungsgemäß verwendeten Stützeinheiten zugleich Probenträger und Etagenböden in einem und können in ihren vertikalen Positionen und Abständen den Größen der Prüflinge angepasst werden. Je nach Bedarf kann eine unterschiedliche Anzahl von Stützeinheiten aufgesteckt bzw. übereinander getürmt werden.

Gemäß der vorliegenden Erfindung können damit Proben einfach und reproduzierbar positioniert, sogar zentrisch positioniert werden, gleiche wiederkehrende Proben, aber auch wieder zu untersuchende Proben, in der gleichen Positionierung untersucht werden, um annähernd gleiche Mesbedingungen und damit auch vergleichbare Ergebnisse zu bekommen und reproduzierbare Untersuchungen durchzuführen, sowohl an der selben Untersuchungseinheit, als auch an unterschiedlichen Untersuchungseinheiten an unterschiedlichen Orten.

Die Erfindung erlaubt damit eine Serienüberwachung in der Produktion, da hierbei unterschiedliche Bediener, verschiedene wiederkehrend produzierte Serienteile in vorgegebenen Abständen untersucht und/oder vermessen werden müssen.

Wichtig ist dabei, ein zu untersuchendes Messobjekt bei Wiederholungsmessungen, aber auch bei Fremdmessungen an anderen Orten bzw. an anderen Untersuchungseinheiten oder -geräten leicht, schnell und sicher reproduzierbar positionieren, aufspannen und/oder fixieren zu können. Eine Dokumentation der Probenlage für der Untersuchung und ein Nachbilden der Messung kann leicht durchgeführt werden.

Eine solche, wiederholbar genaue Positionierung eines Messobjektes erleichtert bei wiederkehrenden Untersuchungen auch die Dokumentation.

Dies ermöglicht es, vergleichbare Untersuchungen oder Messungen von unterschiedlichen Bedienern mit gleichen und unterschiedlichen Uritersuchungsapparaten durchzuführen, um vergleichbare Ergebnisse, Volumendatensätze zu produzieren.

Die Stützeinheit kann bzw sollte in ihrer Positionierung auf die zu untersuchende Einheit abgestimmt sein.

Im Allgemeinen wird auf das Stützmaterial bzw. auf eine solche Stützeinheit das zu messende oder zu untersuchende Objekt bzw. der Prüfling, insbesondere eine flache Probe, unmittelbar aufgelegt oder zumindest angelegt, bis es infolge des gegenseitigen Kontakts zwischen Messobjekt und Stützeinheit allenfalls noch parallel zu der betreffenden Kontaktfläche an der Stützeinheit verschoben werden kann. Um eine möglichst genormte Auf- oder Anlagefläche zum Abstützen eines Messobjekts, zu bieten, sollte seine Kontaktfläche eben ausgebildet sein, abgesehen ggf. von Durchbrechungen in Form von Löchern, Gewinden oder Vertiefungen zur Befestigung der Stützeinheit auf Adaptern und zum Einstecken oder Einschrauben von Anlagestäben oder Einsteckschäften, welche der Positionierung von Prüflingen und von Anlageelementen dienen. Solche Anlagestäbe oder Einsteckschäfte werden durch das Einstecken in die betreffenden Löcher oder Vertiefungen präzise lokalisiert und können sich dann jedenfalls innerhalb der Kontaktflächenebene nicht mehr verschieben, weil die Geometrien und lichten Querschnitte der vorgeformten Einstecklöcher oder Einsteckvertiefungen einerseits sowie die Geometrien und Querschnitte eines darin einzusteckenden Anlageelements oder Einsteckschaftes andererseits derart aufeinander abgestimmt sind, dass sich zwischen beiden Elementen eine permanente Klemmkraft einstellt. Sie bilden sodann unveränderliche Referenzpunkte, an welche das Messobjekt parallel zu der Kontaktflächenebene herangeschoben werden kann, um dadurch eine präzise Positionierung zu erfahren. Indem mehrere solcher Löcher oder Vertiefungen in einem Raster angeordnet sind, gibt es für die Positionierung dieser Anlagestäbe oder Einsteckschäfte unterschiedliche Möglichkeiten, so dass ein, die betreffende Messeinrichtung bedienender Operator, für jedes Messobjekt eine individuell optimierte Positionierung der Anlagestäbe finden kann. Indem eine solche Stützplatte bevorzugt eine niedrige spezifische Dichte aufweist, insbesondere eine niedrigere spezifische Dichte als der Prüfling selbst, ist diese für Röntgenstrahlen od. dgl. nahezu transparent und beeinträchtigt dadurch die Erfassung des eigentlichen Messobjektes kaum.

Sofern die Erfindung im Rahmen einer Untersuchung oder Vermessung mittels Röntgenstrahlen verwendet wird, sollten, die für die Bestandteile des erfindungsgemäß verwendeten Baukastensystems, insbesondere für die Stützeinheit und/oder für die Anlagestäbe, Einsteckschäfte und/oder sonstigen Anlageelemente verwendeten Materialien für die von einer Röntgenquelle erzeugte Röntgenstrahlung einen kleineren Schwächungskoeffizienten aufweisen als das Material des zu untersuchenden Werkstücks selbst. Der Röntgenstrahlen-Schwächungskoeffizient des für die Bestandteile des erfindungsgemäß verwendeten Baukastensystems verwendeten Materials sollte höchstens halb so groß sein wie der betreffende Schwächungskoeffzient des Materials, woraus das zu untersuchende Werkstück besteht, bevorzugt höchstens ein Fünftel so groß, besonders bevorzugt nur ein Zehntel so groß.

Da in vielen Fällen der Röntgenstrahlen-Schwächungskoeffizient mit der spezifischen Dichte eines Materials korreliert, wird erfindungsgemäß angestrebt, für das erfindungsgemäß verwendete Baukastensystem Matierialien mit einer möglichst geringen spezifischen Dichte zu verwenden. Solchenfalls werden die meisten Prüflinge eine höhere Dichte aufweisen als die erfindungsgemäß verwendeten Baukastenbestandteile, insbesondere die Stützeinheit und die Anlageelemente, erscheinen letztere auf einer Röntgenaufnahme nahezu transparent, und die Prüflinge werden nahezu schwebend dargestellt.

Es hat sich als günstig erwiesen, dass auf wenigstens einer Grundseite der Stützplatte wenigstens eine Markierung zum erleichterten Auffinden einer optimalen Position für das Messobjekt vorgesehen ist. bevorzugt handelt es sich hierbei um neutrale, also von jeglicher Produktform losgelöste Markierungen, bevorzugt in Form einfacher geometrischer Objekte wie gerade Linien mit einer vorgegebenen Ausrichtung, Kreise, Quadrate oder Dreiecke, etc. Natürlich könnte bspw. eine Linie auch mit Abstandsmarkierungen in Form einer Längenskala versehen sein, oder ein Kreis mit einer Gradeinteilung, etc.

Die Erfindung erlaubt eine Weiterbildung dahingehend, dass die Markierung wenigstens einen Kreis oder mehrere, zueinander konzentrische Kreise aufweist. Zueinander konzentrische Kreise erlauben eine zentrale Positionierung eines Objektes unabhängig von dessen Größe bzw. Abmessungen.

Sind diese Kreise auf das Zentrum des Messbereiches, bspw. auf die Drehachse eines Computertomographen abgestimmt, deuten diese Kreise den Rekonstruktionszylinder der betreffenden Messeinrichtung an und erlauben eine zentrale Positionierung eines Messobjektes.

Ferner ist es wichtig, die Bohrungen und Markierungen in bzw. auf einer Stützplattelatte derart aufeinander abgestimmt anzuordnen, dass diese einen Bezug, insbesondere einen zentrischen Bezug, zu einem fixen Punkt in der Untersuchungseinheit oder in bzw. an anderen Objekten haben, wie z.B. Kreuztischen, Führungsschlitten, Referenz- oder Mittelpunkten von Positioniervorrichtungen, etc.

Dadurch besteht insbesondere die Möglichkeit, die Stützplatte derart auszurichten, dass der Mittelpunkt einer dortigen kreisförmigen Markierung und/oder der Mittelpunkt von kreisförmig angeordneten. Einstecklöchern konzentrisch zu einem Mess-Mittelpunkt der Mess- oder Untersuchungseinheit liegt oder sich an diese Position einstellen lässt.

Bei einer solchen Ausrichtung oder Justierung auf den Mess-Mittelpunkt der Untersuchungseinrichtung und/oder auf die Achse eines Manipulators in einem CT markieren die an einer Stützplatte angeordneten Kreise das Messfeld oder einen Rekonstruktionszylinder der Messanordnung, und die Prüflinge können leicht mittig bzw. zentrisch angeordnet werden, wodurch ein Nachkorrigieren und somit Zeit eingespart werden kann. Dadurch kann teilweise auf teure Einrichtplätze oder Rüsttische zum Zentrieren der Proben verzichtet werden.

Auch Proben, welche, insbesondere für Mehrfachmessungen, zentrisch übereinander positioniert werden müssen, können solchenfalls leicht zentriert werden. Dies ist wichtig, wenn sich bei bestimmten Messungen die Prüflinge um bspw. 360° drehen, weil deshalb alle übereinander gestapelten Proben zentrisch zu dieser Drehachse positioniert sein sollten.

Es liegt im Rahmen der Erfindung, dass die Markierung wenigstens einen von dem Mittelpunkt des Kreises oder der zueinander konzentrischen Kreise ausgehenden Radialstrahl aufweist. Ein solcher Radialstrahl könnte beispielsweise die Lage einer Ecke eines Objektes markieren und also der wiederholbar genauen Orientierung eines Objektes dienen. Darüber hinaus könnte ein solcher mit einer Längenskala versehen sein, oder mit einer Nummerierung der verschiedenen, zueinander konzentrischen Kreise.

Die Erfindung empfiehlt, dass die Markierung wenigstens eine gerade gestreckte Linie oder wenigstens eine Schar von mehreren, zueinander parallelen Linien aufweist. Solche Linien können beispielsweise der Anlage einer Kante eines Objektes dienen und damit dessen Ausrichtung im Raum festlegen.

Die Erfindung lässt sich dahingehend weiterbilden, dass die Markierung zwei sich schneidende, gerade gestreckte Linien oder zwei Scharen von jeweils mehreren, zueinander parallelen Linien aufweist. Damit findet eine Kante des Messobjekts unabhängig von dessen genauer Lage und Größe jeweils eine eng benachbarte Linie zu ihrer Parallelausrichtung.

Wenn sich die Linien unterschiedlicher Linienscharen jeweils rechtwinklig schneiden, so erhält man ein Raster ähnlich der Trennlinien zwischen den Feldern eines Schachbrettes. Eine solche Markierung erlaubt bei einem rechtwinkligen Objekt die Anlage zweier zueinander lotrechter Kanten desselben an je einer Linie und gleichzeitig die Zentrierung des Objektes auf dem durch die sich schneidenden Linienscharen gebildeten Raster.

Eine oder mehrere Linien der Markierung können mit einer Benennung versehen sein, beispielsweise mit einem Buchstaben oder einer Zahl. Dies erleichtert es insbesondere, die Linien abzuzählen bzw. eine Linie aus einer Linienschar auszuwählen, um das Messobjekt daran auszurichten.

Eine oder mehrere Linien oder anderweitige Markierungen können - wie in der Koordinatentechnik - mit +/-X- und +/-Y- Achsen versehen sein.

Bevorzugt werden die Einstecklöcher oder Einsteckvertiefungen an den Schnittpunkten zweier Linien unterschiedlicher Scharen der Markierung angeordnet. Dann können die gleichen Abstände zwischen den Linien einer Linienschar dazu verwendet werden, um Einstecklöcher oder -vertiefungen an genormten Positionen zu erzeugen. Außerdem können dann die einzelnen Einstecklöcher oder - vertiefungen leichter identifiziert werden, insbesondere durch Benennung der abzählbaren Benennungen der beiden Linienscharen, also beispielsweise "A3" oder "H7". Im Gegensatz zu dem bekannten Schachspiel. werden also nicht die einzelnen Felder mit Buchstaben oder Zahlen benannt, sondern die Trennungslinien zwischen den Feldern, weil dadurch dann jeder Schnittpunkt und damit ein dortiges Einsteckloch eine eigene, unverwechselbare Bezeichnung trägt.

Die Erfindung bietet die Möglichkeit, die Einstecklöcher oder Einsteckvertiefungen in einem rechtwinkligen Raster anzuordnen, oder in einem dreieckigen oder sechseckigen Raster, oder in einem zu einem Mittelpunkt konzentrischen Raster. Zum Aufspannen verschiedener Messobjekte können unterschiedliche Stützplatten mit jeweils einer anderen Geometrie des Rasters vorgesehen sein, die dann je nach Bedarf ausgewählt werden können. Darüber hinaus kann auch die Vorder- oder Oberseite Rückseite und die Rück- oder Unterseite mit Rastern unterschiedlicher Geometrien versehen sein, um jede Stützplatte variabel nutzen zu können.

Es hat sich als günstig erwiesen, dass zwei oder mehrere Einstecklöcher oder Einsteckvertiefungen durch eine linienförmige Markierung verbunden sind, beispielsweise durch eine oder mehrere gerade gestreckte oder kreisbogenförmige Linie(n).

Dabei können von wenigstens einem Einsteckloch oder von wenigstens einer Einsteckvertiefung mehrere Markierungslinien weg streben. Je nach der Art des gewählten Rasters können zwei derartige Masrkierungslinien miteinander fluchten, oder sie können bei einem Einsteckloch oder bei einer Einsteckvertiefung nicht in einer gemeinsamen Flucht zusammentreffen.

Mehrere Markierungslinien können sich an einem Einsteckloch oder an einer Einsteckvertiefung schneiden, vorzugsweise unter rechten Winkeln.

Erfindungsgemäß ist weiterhin vorgesehen, dass wenigstens eine verwendete block- oder plattenförmige Stützeinheit zusätzliche Montageelemente in Form von Aufstecklöchern außerhalb des Rasters aufweist, zum Befestigen oder Aufstecken einer block- oder plattenförmigen Stützeinheit an/auf Haltestäben oder zu ihrer Fixierung auf einem Adapter. Damit ist eine präzise Fixierung einer Stützplatte an einer vorgegebenen Position möglich, so dass auf der Stützplatte angeordnete Markierungen nicht nur relativ zueinander vorgegeben sind, sondern auch im Raum eindeutig lokalisiert sind und damit insbesondere gegenüber der Messeinrichtung, so dass letztere an bestimmten Markierungen ausgerichtete Messobjekte stets an den selben Messkoordinaten vorfindet.

Die Erfindung zeichnet sich ferner aus durch einen Adapter zur Fixierung wenigstens einer block- oder plattenförmigen Stützeinheit, der eine ebene Oberseite aufweist, die unter einem Winkel zwischen 1° bis 90° gegenüber der Horizontalen geneigt ist.

Ein solcher Adapter kann an oder in seiner Oberseite ein oder mehrere Elemente zur Befestigung von Haltestäben aufweisen, insbesondere derart, dass die daran festgelegten Haltestäbe lotrecht zu der Oberseite des Adapters verlaufen.

Andererseits können die Längsachsen der Aufstecklöcher in wenigstens einer block- oder plattenförmigen Stützeinheit lotrecht zu der Stützoberfläche der betreffenden Stützeinheit verlaufen, oder unter einem gegenüber der Lotrechten an die Stützoberfläche der Stützeinheit schrägen Neigungswinkel zwischen 1° und 89°, vorzugsweise einem Neigungswinkel zwischen 2° und 30°, insbesondere einem Neigungswinkel zwischen 5° und 20°.

Dadurch, dass die Aufstecklöcher die Stützplatte vollständig durchsetzen, ist darüber hinaus die Möglichkeit eröffnet, die Stützplatte längs der jene durchsetzenden Haltestäbe verschieben zu können, insbesondere um die Position einer Stützplatte längs der Haltestäbe einstellen zu können. Um hier eine genormte Position zu finden, könnten ein oder mehrere Haltestäbe zudem mit einer in ihrer Längsrichtung verlaufenden Skala versehen sein. Durchgehende Aufstecklöcher erlauben es. überdies, mehrere Stützplatten auf den selben Haltestäben übereinander anzuordnen, flexibel anzuordnen und also mehrere Messobjekte in verschiedenen Höhen, Abständen anpassbaren Etagen übereinander zu positionieren. Eine Messeinrichtung könnte solchenfalls nach erfolgter Messung eines Objektes relativ zu den Stützplatten um eine Etage verschoben werden, um sodann das nächste Objekt zu messen.

Die Aufstecklöcher können die Stützplatte lotrecht durchdringen; allerdings empfiehlt die Erfindung, dass die Aufstecklöcher die Stützplatte in einem gegenüber der Lotrechten an die Stützplatte schrägen Neigungswinkel, beispielsweise einem Neigungswinkel zwischen 1° und 85°, oder zwischen 1° und 60°, aber auch zwischen 1° und 45°, vorzugsweise einem Neigungswinkel zwischen 2° und 30°, insbesondere einem Neigungswinkel zwischen 5° und 20°. Sofern die Haltestäbe vertikal ausgerichtet sind, hat ein Neigungswinkel der Aufstecklöcher gegenüber dem Lot an die Ebene der Stützplatte den Effekt, dass die Ebene einer aufgesteckten Stützplatte nicht horizontal verläuft, sondern unter eben diesem Neigungswinkel in einer bestimmten Richtung geneigt ist. Dies wiederum hat zur Folge, dass ein auf der Stützplatte aufliegendes Messobjekt einer Hangabtriebskraft unterliegt, die um so stärker ist, je größer der Neigungswinkel zwischen der Längsachse der Aufstecklöcher und dem Lot an die Ebene der Stützplatte ist. Werden nun in Einstecklöchern oder -vertiefungen beispielsweise zwei Anlageelemente auf etwa gleicher Höhe längs der geneigten Stützplatte positioniert, so wird ein oberhalb dieser beiden Anlageelemente platziertes Messobjekt von seiner Hangabtriebskraft gegen eben jene beiden Anlageelemente gedrückt und dadurch in eine genau vorgegebene Lage bewegt und dort gehalten. Ein solches Andrücken kann durch ein weiteres Anlageelement verstärkt werden, um eine Probe einzuspannen.

Eine weitere Ausführungsform der Erfindung besteht darin, die Stützplatten anstelle mittels Haltestäben auf Ihre Neigung und Position zu bringen, diese auf einen geneigten Adapter zu montieren, welcher unterschiedliche Formen, wie z.B. rechteckig, quadratisch, rund, etc., aufweisen kann. Ein solcher Adapter kann aus dem selben oder einem ähnlichen Material bestehen wie die Stützeinheiten.

Der Adapter übernimmt mit seiner vorgegebenen Neigung die Aufgabe der Haltestäbe und Aufstecklöcher und bringt die Stützplatten in die gewünschte Neigung. Die Stützplatten können zentrisch auf einem Adapter montiert werden, z.B. gesteckt, geschraubt und/oder geklebt.

Der Adapter, auf welchen die Stützplatte angebracht werden kann, sollte an seiner Oberseite einen schrägen Neigungswinkel, beispielsweise einem Neigungswinkel zwischen 1° und 85°, oder zwischen 1° und 60°, aber auch zwischen 1° und 45°, vorzugsweise einem Neigungswinkel zwischen 2° und 30°, insbesondere einem Neigungswinkel zwischen 5° und 20° haben.

Werden die Stützplatten auf einem solchen Adapter mit einer geneigten Oberseite montiert, so wird der Neigungswinkel der Oberseite auf die daran montierten Stützplatten übertragen, und dieser Neigungswinkel hat zur Folge, dass ein auf der Stützplatte aufliegendes Messobjekt einer Hangabtriebskraft unterliegt, die umso stärker ist, je größer der Neigungswinkel der Adapter ist. Werden nun in Einstecklöchern oder -vertiefungen beispielsweise zwei Anlageelemente auf etwa gleicher Höhe längs der geneigten Stützplatte positioniert, so wird ein oberhalb dieser beiden Anlageelemente platziertes Messobjekt von seiner Hangabtriebskraft gegen eben jene beiden Anlageelemente gedrückt und dadurch in eine genau vorgegebene Lage bewegt und dort gehalten. Ein solches Andrücken kann durch ein weiteres Anlageelement verstärkt werden, um eine Probe einzuspannen.

Diese Aufstecklöcher können zur Fixierung oder zum Anschrauben einer Stützplatte an einem Adapter verwendet werden. Der Adapter sollte auch auf das Zentrum der Messeinheit abgestimmt sein.

Die Aufstecklöcher bzw. Befestigungslöcher sollten bei der Adaptervariante die Stützplatte lotrecht durchdringend angeordnet sein, insbesondere, derart, dass die Längsachsen der Aufstecklöcher parallel zu den Längsachsen der Einstecklöcher verläuft.

Andererseits müssen dieselben eine Stützplatte nicht vollständig durchdringen, sondern können auch von entgegengesetzten Flächen in jene eingearbeitet sein, also derart, dass ihre Längsachsen antiparallel zueinander verlaufen.

Bei Verwendung eines Adapters können größere und dickere Stützplatten verwendet werden. Ein solcher Adapter kann auf einer Montageplatte oder auf oder mittels eines Kreuztischs oder auf einer sonstigen Weise in einer Mess- oder Untersuchungseinheit montiert werden.

Das erfindungsgemäß verwendete Baukastensystem besteht aus wenigstens einer Stützeinheit zur unterseitigen Abstützung eines Messobjektes, sowie Einsteckschäften, welche an vorgegebenen Stellen in eine Stützeinheit einsteckbar sind und den Prüfling stützen.

Weiterhin können Anlageelemente mit Ausnehmungen vorgesehen sein. Dabei durchgreifen Einsteckschäfte diese Ausnehmungen der Anlageelemente und sind an vorgegebenen Stellen in einer Stützeinheit einsteckbar; die davon gehaltenen Anlageelemente können dann den Prüfling stützen.

Für eine Stützeinheit, wie auch für die weiteren Baukastenelemente sollten Materialien mit einer geringen Dichte verwendet werden wie z.B. Aluminium, Carbon, Balsaholz, geschäumte Materialien, insbesondere Rohacell.

Als Stützeinheit hat sich ein geschäumtes Material bewährt, bspw. das Material "Rohacell". Damit lässt sich eine solche Stützeinheit einfach auf einen Tragkörper mit nach oben ragenden Dornen stecken, derart, dass die Dornen in das geschäumte Material der Stützeinheit an beliebigen Stellen oder an dafür vorbereiteten Stellen eindringen.

Die Stützeinheiten sollten allerdings immer möglichst gleich positionierbar sein, um reproduzierbare Untersuchungen durchführen zu können. Eine Möglichkeit, um eine Stützeinheit mit einer hohen Wiederholgenauigkeit fixieren zu können, besteht darin, diese auf ihrer dem Messobjekt abgewandten Unterseite mit vorgegebenen, codierten Löchern zu versehen, welche genau auf entsprechend angeordnete Positionierstäbe oder auf eine in entsprechender Weise mit Stiften oder Dornen bestückte codierte Grundplatte passen.

Bei Verwendung derartiger codierter Aufstecklöcher und bei Verwendung eines in zwei zueinander rechtwinkligen Richtungen einstellbaren Kreuztisches müssen runde oder symmetrische, insbesondere rotationssymmetrische Teile bzw. Messobjekte nur in eine Richtung zentriert werden, da solche Teile durch die Rasterlöcher schon gemittelt werden können. Dadurch wird das Zentrieren derartiger Teile oder Messobjekte erleichtert.

Stapelt man die Platten mit gleichen Prüflingen übereinander, kann man die erste mit dem positionierten und ausgerichteten Prüfling auf die anderen Platten übertragen bzw. reproduzieren und kann somit alle Teile genau übereinander mit der gleichen Position stapeln. Dieses ermöglicht einen Mehrfachscan mit einen minimalen Rekonstruktionszylinder, was Zeitersparnis durch geringere Rekonstruktionsbilder bringt und oder eine bessere Auflösung zulässt.

Bei Löchern oder codierten Löchern ist es bei geschäumten Materialien wie Rohacell von Vorteil, diese an ihrer Unterseite mit einer Lochplatte, einer glatten Lochplatte oder einer Folie mit den codierten Löchern zu versehen, welche das Auffinden der vorgegebenen Löcher in der Stützeinheit erleichtern.

Die Einstecklöcher und/oder die Aufstecklöcher in der Stützplatte können einen runden oder mehreckigen Querschnitt aufweisen, beispielsweise einen kreisrunden, viereckigen, sechseckigen oder achteckigen Querschnitt. Ein Aspekt für die Auswahl des geeigneten Querschnitts bei Einstecklöchern ist dabei, ob sich das darin einzusteckende Anlageelement um die Längsachse des Einstecklochs drehen können soll oder nicht. Sofern eine wiederholbar genaue Ausrichtung eines Anlageelements gewünscht ist, wäre bei einem einzeln zu verwendenden Ein- oder Aufsteckloch ein mehreckiger Querschnitt einem kreisförmigen Querschnitt vorzuziehen, so dass eine Relativverdrehung gegenüber einem anzuschließenden Teil ausgeschlossen ist. Falls mehrer. Ein- oder Aufstecklöcher gemeinsam zur Verbindung an/mit einem anderen Teil verwendet werden, so ist eine wiederholbare genaue Ausrichtung auch bei Verwendung von Ein- oder Aufstecklöchern mit rundem Querschnitt gewährleistet.

Die Erfindung kann eine bevorzugte Weiterbildung dahingehend erfahren, dass in die Einstecklöcher. und/oder die Aufstecklöcher in der Stützplatte einsteckbare Anlageelemente oder Haltestäbe einen Schaft aufweisen mit einem konstanten, zu einem Einsteckloch und/oder einem Aufsteckloch komplementären Querschnitt. In diesem Fall ist einerseits ein maximaler Flächenkontakt zwischen einem Ein- oder Aufsteckloch und einem darin aufgenommenem Anlageelement oder Haltestab möglich, andererseits lässt sich damit bei einem mehreckigen Querschnitt eine unverdrehbare Ausrichtung realisieren, wobei dem Anlageelement gegenüber der Stützplatte bzw. der Stützplatte gegenüber dem Haltestab nur einige diskrete Orientierungen erlaubt sind.

Ein oder mehrere Einstecklöcher und/oder Aufstecklöcher in der Stützeinheit können jeweils mit einem Innengewinde versehen sein und darin einsteckbare Anlageelemente oder Haltestäbe oder Montageelemente eines Adapters einen Gewindeschaft aufweisen mit einem zu dem Innengewinde eines Einstecklochs und/oder eines Aufstecklochs passenden Gewinde.

Alternativ dazu besteht auch die Möglichkeit, dass in die Einstecklöcher und/oder die Aufstecklöcher in der Stützplatte einsteckbare Anlageelemente oder Haltestäbe einen Schaft aufweisen mit einem von dem betreffenden Einsteckloch oder Aufsteckloch abweichenden Querschnitt. Damit wird die Kontaktfläche zwischen dem betreffenden Loch und dem darin aufgenommenen Schaft reduziert, wodurch die Reibung zwischen Schaft und Loch eingestellt bzw. vorgegeben werden kann. Die Reibung sollte derart eingestellt werden, dass einerseits die Gleitreibung möglichst gering ist, damit das Auf- oder Einstecken relativ leicht und ohne zu klemmen möglich ist; andererseits sollte aber die Haftreibung möglichst hoch sein, damit sich im auf- oder eingesteckten Zustand eine möglichst innige Verbindung ergibt und im Laufe der zeit nichts verrutscht. Als Schaft wird dabei ein langgestreckter Teil des betreffenden Elements angesehen, vorzugsweise mit einem konstanten Querschnitt, wie er insbesondere bei einem Profil, einem Stiel oder einem Stift vorkommt. Eine bestimmt Querschnittsform ist damit jedoch nicht verbunden; diese muss daher nicht kreisförmig sein, sondern könnte bspw. auch mehreckig sein.

Besonders empfiehlt die Erfindung eine Ausbildung dahingehend, dass ein Ein- oder Aufsteckloch einen kreisrunden Querschnitt aufweist und der Schaft eines darin einsteckbaren Anlageelements oder Haltestabs einen mehreckigen Querschnitt, oder umgekehrt. Dabei wird bei einem kreisförmigen Loch für den Schaft eines einsteckbaren Elements dessen mehreckiger Querschnitt von dem Kreisquerschnitt des Lochs außen umgeben, während der Querschnitt eines mehreckigen Lochs den kreisförmigen Querschnitt eines eingesteckten Elements außen umgibt. Ist dabei das querschnittlich mehreckige Element innen, liegen dessen nach außen vorspringende Kanten an der hohlzylindrischen Mantelfläche des Lochs an; befindet sich das querschnittlich mehreckige Element dagegen außen, so liegt es im Bereich der Mitten seiner Seiten an der zylindrischen Mantelfläche an. In beiden Fällen ergeben sich zwischen zwei Kontaktbereichen jeweils Taschen, wo beide Flächen voneinander abgehoben sind und also die Reibung null ist.

Eine bevorzugte Ausführungsform zeichnet sich dadurch aus, dass ein Anlageelement einen Anlagebereich aufweist sowie einen davon weg ragenden Einsteckschaft. Während dabei der Querschnitt des Einsteckschaftes ausschließlich, durch die Abmessungen des zu dessen Aufnahme vorgesehenen Einstecklochs vorgegeben ist, richtet sich die Gestalt und insbesondere der Querschnitt des Anlagebereichs vor allem nach den Eigenschaften des damit zu fixierenden Messobjektes. Der Anlagebereich kann entlang seiner Höhe, d.h. seines Abstandes zu dem Einsteckschaft, einen gleichbleibenden Querschnitt aufweisen, was jedoch nicht zwingend ist. Der Umfang des Anlagebereichs könnte beispielsweise auch eine doppelt konvexe Gestalt aufweisen, ähnlich einer Kugel oder einem Torus. Darüber hinaus kann die grundsätzliche Form des Anlagebereichs nach außen gewölbt sein, also beispielsweise eiförmig, elliptisch oder rotationssymmetrisch, aber auch ein mehreckiger oder prismatischer Querschnitt ist denkbar; wie auch eine Kombination verschiedener Querschnitte entlang des Umfangs.

Weitere Vorteile ergeben sich dadurch, dass der Anlagebereich durch den Umfang eines scheibenförmigen bzw. gegenüber dem Einsteckschaft scheibenförmig erweiterten Bereichs des Anlageelements gebildet ist. Der Verlauf des Umfangs des scheibenförmigen Anlagebereichs kann dabei verschiedenen Erfordernissen entsprechend gestaltet sein.

Insbesondere kann der Einsteckschaft exzentrisch zu dem Anlagebereich bzw. einem Teil oder dem gesamten Umfang des scheibenförmigen Bereichs angeordnet sein. Dies ist bei einem scheibenförmigen Anlagebereich mit einem rotationssymmetischen Umfang dadurch möglich, dass die Rotationsachsen des Einsteckschaftes und des Anlagebereichs nicht koaxial zueinander verlaufen; bei einem ovalen, eiförmigen oder auf sonstige Weise asymmetrischen Verlauf verläuft ohnehin stets ein Teil des Umfangs exzentrisch zu dem übrigen Teil des Umfangs, d.h., die Mittelpunkte der Krümmungsradien aller Bereiche fallen nicht zusammen, sondern sind exzentrisch in Relation zueinander, und können also auch nicht allesamt koaxial zu der Längsachse des Einsteckschaftes sein.

Indem ein Einsteckschaft, Anlagestab oder sonstiges Anlageelement und/oder ein Haltestab aus einem Material besteht, dessen spezifische Dichte 3 kg/dm³ beträgt oder weniger, beispielsweise 2,75 kg/dm³ oder weniger, bevorzugt 2,5 kg/dm³ oder weniger, vorzugsweise 2,25 kg/dm³ oder weniger, insbesondere 2 kg/dm³ oder weniger, wird er bei einer Röntgenaufnahme weniger störend empfunden als ein Anlageelement oder Haltestab mit einer höheren Dichte. Darüber hinaus besteht die Möglichkeit, bei genauer Kenntnis der Position und Ausrichtung eines Anlageelements oder Haltestabs, also insbesondere aufgrund lagemäßig genormter Auf- oder Einstecklöcher, sowie in Kenntnis der Form und Abmessungen des betreffenden Elements bei einer Röntgenaufnahme od. dgl. Aufnahme diese Elemente zu identifizieren und auszumaskieren bzw. zu retuschieren. Diese Vorgaben können beispielsweise von Aluminium erfüllt werden, dessen Dichte üblicherweise bei 2,7 kg/dm³ liegt, aber auch von Carbon mit einer Dichte von ca 1,8 kg/dm³.

Andererseits lassen sich Stützplatten, oder -blöcke, Einsteckschäfte, Anlagestäbe oder sonstige Anlageelemente, aber ggf. auch Haltestäbe aus einem Material mit einer geringeren Dichte realisieren, beispielsweise mit einer spezifischen Dichte von 1,5 kg/dm³ oder weniger, bevorzugt 1 kg/dm³ oder weniger, vorzugsweise 0,6 kg/dm³ oder weniger, insbesondere 0,4 kg/dm³ oder weniger, indem hierfür z.B. Balsaholz Verwendung findet, dessen Dichte üblicherweise in einem Bereich von 40 g/dm³ bis 340 g/dm³ liegt, oder Aluminiumschaum, dessen Dichte üblicherweise in einem Bereich von 140 g/dm³ bis 500 g/dm³ liegt. Ferner geeignet sind geschäumte Kunststoffe, insbesondere Hartschäume, deren Dichten üblicherweise sogar unterhalb von 120 g/dm³ liegen, z.B. bei etwa 6,5 bis 50 g/dm³ (Polystyrolschaum, EPS, XPS), bei etwa 30 bis 90 g/dm³ (Polyurethanschaum), oder bei etwa 30 bis 110 g/dm³ (Polymethacrylimid, Rohacell).

Ein Einsteckschaft und/oder Anlagestab kann massiv hergestellt sein, insbesondere wenn es aus einem Material mit einer sehr geringen Dichte besteht wie beispielsweise aus Aluminium, Kunststoff, inbsbesondere aus geschäumten Materialien wie Styropor, Styrodur oder Rohacell, oder aus Balsaholz.

Bei Verwendung einer Geometrie mit einer hohen Stabilität kann ein Anlageelement auch aus einem Zuschnitt aus Papier oder aus einem Gewebe aus einer Faser oder einem Roving aus Kohlenstoff hergestellt sein, insbesondere wenn es sich bei den damit zu fixierenden Messobjekten um relativ leichte Gegenstände handelt. Eine Geometrie mit einer hohen Stabilität wäre beispielsweise eine Kegelform, die ihre Strukturintegrität durch ihre Verbindung mit einem rückwärtigen, beispielsweise zylindrischen Einsteckschaft erhält.

Einem entsprechenden Erfindungsgedanken folgend kann ein Einsteckschaft, Anlagestab oder ein Haltestab auch als Rohr ausgebildet sein, beispielsweise aus Aluminium oder aus einem Gewebe aus einer Faser oder einem Roving aus Kohlenstoff. In diesem Fall resultiert die Stabilität vor allem aus der Kombination eines ausreichend steifen Materials mit der hohen Steifheit einer rohrförmigen Struktur.

Wenn ein Haltestab an seinem oberen Ende verjüngt ist, beispielsweise kegelförmig oder kegelstumpfförmig verjüngt, so wird das Aufstecken einer oder mehrerer Stützplatten erleichtert. Allerdings sollte der eigentliche Schaft des Haltestabs möglichst zylindrisch oder prismatisch gestaltet sein, also mit einem gleichbleibenden Querschnitt, damit eine dort positionierte Stützplatte aufgrund einer ausreichenden Haftreibung selbsttätig nicht verrutscht.

Andererseits kann ein Haltestab an seinem unteren Ende mit einem Gewinde versehen sein, vorzugsweise mit einem Außengewinde oder mit einem Innengewinde. Ein solches Gewinde erlaubt eine Fixierung des betreffenden Haltestabs an einem dazu komplementären Gewindeelement.

Bei einem massiv ausgebildeten Haltestab kann eine besondere Gestaltung an dessen oberem und/oder unteren Ende unmittelbar in dem Material des betreffenden Haltestabs eingeformt sein oder werden. Jedoch wird zur Erzeugung einer Verjüngung oder einer besonderen, bspw. konischen oder kugelförmigen Gestaltung des freien oberen Endes, oder für die Erzeugung eines Gewindes an dem unteren Ende eines rohrförmigen oder anderweitig hohl ausgebildeten Haltestabs von der Erfindung empfohlen, dass am oberen und/oder unteren Ende des Haltestabs ein mit einer Verjüngung oder sonstigen Gestaltung und/oder mit einem Gewinde versehenes Element festgelegt ist, beispielsweise in eine Ausnehmung des Haltestabs eingesteckt, eingeschraubt oder eingeklebt.

Eine bevorzugte Ausführungsform der Erfindung zeichnet sich weiterhin dadurch aus, dass mehrere Haltestäbe an einer gemeinsamen Grundplatte oder einem sonstigen, gemeinsamen Basiselement, insbesondere auch an einem Adapter mit einer geneigten Oberseite, festgelegt oder festlegbar sind, vorzugsweise eingeschraubt, eingesteckt oder eingeklebt. Durch ein ausreichend steifes, vorzugsweise plattenförmiges Basiselement wird eine dauerhafte gegenseitige Ausrichtung mehrerer Haltestäbe sichergestellt, so dass die Stützplatten stets leichtgängig aufgesteckt werden können.

Eine solche Grundplatte kann ihrerseits an einer Montageplatte oder an einem sonstigen Arischlusselement einer Messeinrichtung festgelegt oder festlegbar sein.

Von weiterem Vorteil ist es, wenn die Grundplatte an ihrer Unterseite mit einem oder mehreren Magneten versehen ist. Dies hat den Vorteil, dass die Grundplatte auf magnetische Flächen montiert werden kann. Dabei ist es möglich, die Grundplatte auf einer Montagefläche aufzusetzen und auf dieser zu verschieben, um die zu untersuchende Teile bzw. Messobjekte für die Untersuchung auszurichten, zu positionieren und/oder zu zentrieren, insbesondere in Verbindung mit einem Kreuztisch.

Diese Grundplatte kann direkt in der Untersuchungseinheit befestigt werden, bevorzugt mit einem oder mehreren Adaptern, oder alleinstehend mit unterschiedlichen Hilfsmitteln positioniert werden.

Die Haltestäbe sollten derart an einem Basiselement oder einer Grundplatte festgelegt sein, dass sie untereinander parallel sind. Infolge dieser Maßnahme können die Stützplatten problemlos in Richtung der Haltestäbe verschoben werden.

Ferner empfiehlt die Erfindung, dass die Haltestäbe derart an einem Basiselement oder einer Grundplatte festgelegt sind, dass ihre Längsrichtung vertikal ausgerichtet ist, so dass sich bei einer vertikalen Verschiebung einer Stützplatte deren horizontale Position nicht verändert; bei Verwendung eines Adapters mit einer geneigten Oberseite können sie auch derart festgelegt sein, dass ihre Längsachsen lotrecht zu der geneigten Obereite des betreffenden Adapters verlaufen.

Ein weiteres, bevorzugtes Merkmal der Erfindung ist, dass die Haltestäbe an einem Basiselement oder an einer Grundplatte in dem selben Raster oder in den gleichen Abständen festgelegt sind, in welchem bzw. welchen die Aufstecklöcher in einer Stützplatte angeordnet sind. Dadurch ist ein leichtgängiges Aufstecken gewährleistet, weil sodann je ein Aufsteckloch einer Stützplatte mit je einem Haltestab in eine gemeinsame Flucht bringbar ist.

Indem erfindungsgemäß mehrere Stützplatten übereinander an den gleichen Haltestäben gleichzeitig aufsteckbar sind, wird eine Haltekonstruktion mit mehreren Etagen geschaffen, wobei in jeder Etage wenigstens je ein Messobjekt platziert werden kann. Sofern sich die einzelnen Stützplatten jeweils auf vorher festgelegten Höhen befinden, kann die Messeinrichtung derart programmiert werden, dass sie nach Abschluss der Messung eines Messobjekts um die Höhe einer eingestellten Etage relativ zu der erfindungsgemäß verwendeten Haltekonstruktion verfahren wird, und sodann kann die Messung an dem nächsten Messobjekt fortgesetzt werden. Sofern eine Messeinrichtung mit einer derartigen selbsttätigen Einstellmöglichkeit, insbesondere mit verfahrbaren Achsen, und/oder mit einen Hubtisch, ausgerüstet ist, besteht dadurch die. Möglichkeit, dass dieselbe bei einer mit Messobjekten voll beladenen Haltekonstruktion über mehrere Stunden hinweg oder sogar über Nacht vollautomatisch arbeiten kann. Dadurch kann unter Umständen das Personal für eine Nachtschicht, eingespart werden und die Ausnutzung der sehr teueren Anlage gesteigert werden.

Stapelt man gleich gerasterte Stützplatten mit gleichen Prüflingen übereinander, so kann man die Einstellungen an der ersten gerasterten Stützplatte, insbesondere wie diese mit Haltestäben, Anlageelementen und mit dem (den) positionierten und ausgerichteten Prüfling(en) bestückt ist, auf die anderen gleich gerasterten Stützplatten übertragen bzw. reproduzieren und kann somit einander entsprechende Teile bzw. Prüflinge genau übereinander an einander entsprechenden Horizontalpositionen stapeln.

Ferner besteht die Möglichkeit, dass die Haltestäbe an einer Grundplatte in einer codierten Anordnung festgelegt sind, in welcher auch die Aufstecklöcher in der vorzugsweise block- oder plattenförmigen Stützeinheit vorgesehen sind, derart, dass ein Aufstecken nur in einer ganz bestimmten Relativausrichtung möglich ist.

Diesem Erfindungsgedanken weiter folgend sieht die Erfindung vor, dass eine vorzugsweise block- oder plattenförmige Stützeinheit und/oder ein dazu passender Adapter an einer unter- oder rückwärtigen Seite mit einer Schablone versehen ist, insbesondere aus einem geschlossenen, d.h. nicht geschäumten Material, z.B. aus einer Folie, einem Kunststoff oder einer Schicht aus Balsaholz, welche bevorzugt nur an den Aufstecklöchern unterbrochen ist und daher ein Aufstecken der vorzugsweise block- oder plattenförmigen Stützeinheit auf dafür vorgesehenen Haltestäben nur in genau einer vorgegebenen Position und Ausrichtung erlaubt.

Schließlich entspricht es der Lehre der Erfindung, an einem Haltestab zwecks Unterstützung und/oder Fixierung einer Stützplatte Fixierungselemente vorzusehen, insbesondere ringförmige Fixierungselemente. Diese können unmittelbar unterhalb je einer Stützplatte an einem Haltestab festgeklemmt werden, beispielsweise mittels Klemmschrauben. Dies kann auch dadurch erreicht werden, indem ein Fixierungselement zwar ringförmig gestaltet, jedoch mit einem durchgehenden Schlitz versehen ist, wobei die Breite des Schlitzes durch wenigstens eine zwei einander gegenüber liegende, radiale Flächen im Bereich des Schlitzes durchsetzende Schraube variiert werden kann. Wird dadurch die Schlitzbreite reduziert, so verringert sich auch der lichte Querschnitt innerhalb des Rings und das Fixierungselement wird in der betreffenden Position an dem umgriffenen Haltestab festgeklemmt.

Weitere Merkmale, Einzelheiten, Vorteile und Wirkungen auf der Basis der Erfindung ergeben sich aus der folgenden Beschreibung einer bevorzugten Ausführungsform der Erfindung sowie anhand der Zeichnung. Hierbei zeigt:
- Fig. 1: eine erste Ausführungsform einer erfindungsgemäß verwendeten Stützplatte in der Draufsicht;
- Fig. 2: eine zweite Ausführungsform einer erfindungsgemäß verwendeten Stützplatte in einer der Fig. 1 entsprechenden Ansicht;
- Fig. 3.: eine weitere Ausführungsform einer erfindungsgemäß verwendeten Vorrichtung in einer perspektivischen Ansicht, teilweise zusammengebaut;
- Fig. 4: die Vorrichtung nach Fig. 3 in vollständig zusammengefügtem Zustand, in einer perspektivischen Seitenansicht;
- Fig. 5: ein Detail aus Fig. 4 in einer vergrößerten Darstellung;
- Fig. 6: eine wiederum abgewandelte Ausführungsform in einer perspektivischen Ansicht etwa lotrecht zu der verwendeten Stützplatte;
- Fig. 7: eine nochmals abgewandelte Ausführungsform in einer perspektivischen Ansicht ähnlich zu den Fig. 3 und 6; sowie
- Fig. 8: verschiedene Anlageelemente und sonstige Hilfsmittel zur Positionierung eines zu messenden Werkstücks auf einer Stützplatte.

Den Kern einer erfindungsgemäß verwendeten Vorrichtung 1 bildet eine Stützeinheit 2, 2' in Form eines Stützblocks oder eine Stützplatte, worauf ein oder mehrere, zu messende und/oder zu untersuchende Messobjekte 3 im Rahmen einer Meß- und/oder Untersuchungseinrichtung, bpsw. zur Durchführung einer Röntgen- oder einer Computertomographie- Untersuchung, platzierbar sind.

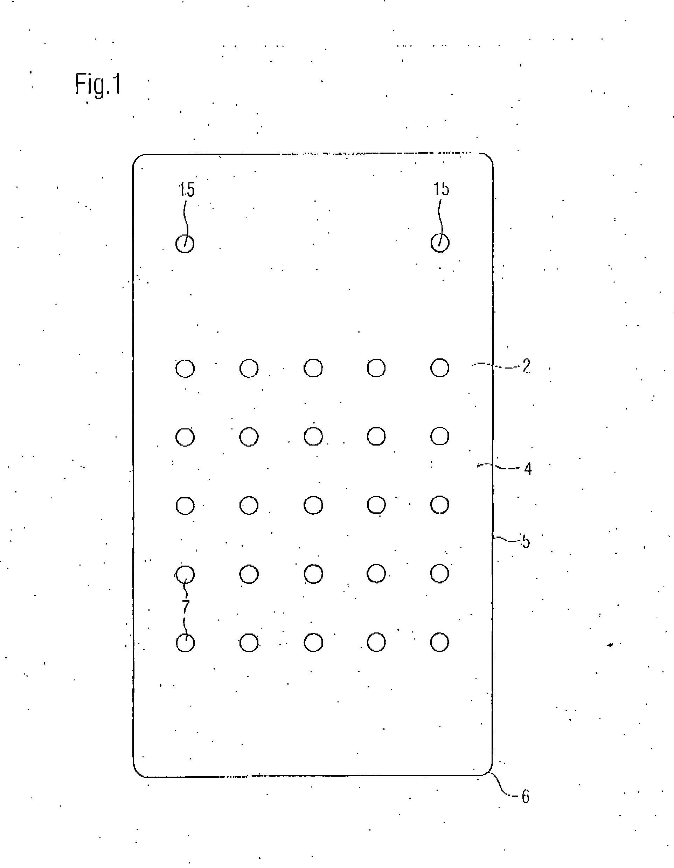

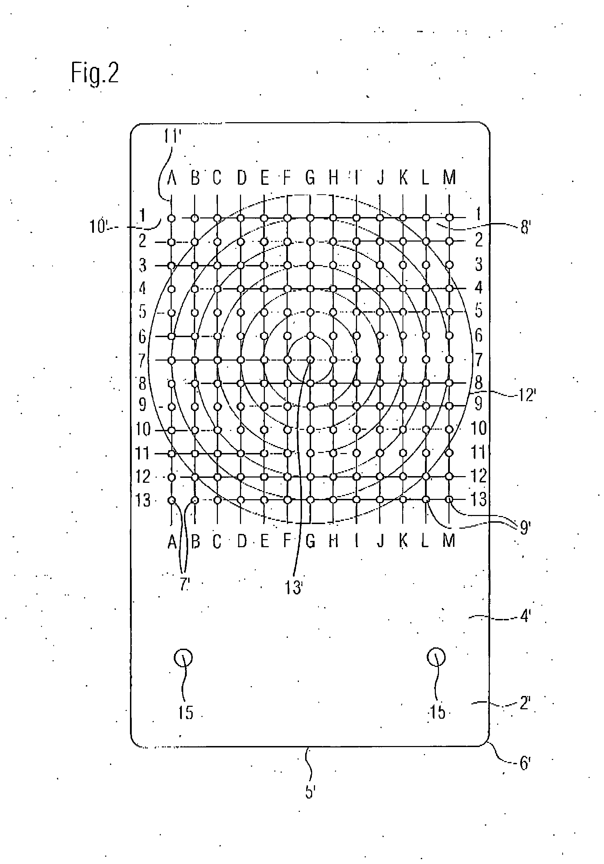

Die in den Figuren 1 und 2 in der Draufsicht auf ihre Oberseite 4, 4' beispielhaft wiedergegebenen Stützblöcke oder Stützplatten, d.h. Stützeinheiten 2, 2', haben jeweils eine konstante Dicke und vorzugsweise einen rechteckigen Umfang 5, 5'; es sind jedoch auch andere Umfangsformen denkbar wie bspw. eine keilförmig gestaltete Form mit variierender Dicke, und/oder ein kreisförmiger oder elliptischer oder mehreckiger Umfang. Wie die Figuren 1 und 2 weiter zeigen, können die der Oberseite 4, 4' lotrecht verlaufenden Stirnkanten 6, 6' abgerundet sein. Die Stützeinheiten 2, 2' können jede beliebige Umfangsform und Dicke aufweisen. Im Rahmen dieser Patentanmeldung wird anstelle des Begriffs "Stützeinheit" manchmal der Begriff "Stützplatte" verwendet; dieser soll dabei jedoch stellvertretend sowohl für plattenförmige Stützelemente verwendet werden als auch für anders gestaltete Stützelemente, beispielsweise in Block- oder Keilform, etc. Jedoch wird für eine platzsparende Fixierung, beispielsweise unter Aufstecken oder Aufschieben auf Haltestäbe, Adapterblöcke od. dgl., eine Plattenform zumindest aus Gründen des minimal benötigten Platzbedarfs in vertikaler Richtung bevorzugt.

Die Stützplatte 2, 2' weist in ihrer ebenen Oberseite 4, 4' mehrere Einstecklöcher 7, 7' auf, welche die Stützplatte 2, 2' vorzugsweise vollständig durchsetzen.

Man erkennt ferner, dass die Anordnung der Einstecklöcher 7, 7' einem regelmäßigen Muster folgt, so dass die Position jedes Einstecklochs 7, 7' genau vorgegeben ist. Bei den dargestellten Ausführungsformen handelt es sich hierbei um ein zweidimensionales Raster, insbesondere um ein Raster mit Spalten und Zeilen und einer quadratischen Grundzelle.8', die mehrmals nahtlos nebeneinander gesetzt ist und sich also in jeder Spalte und in jeder Zeile mehrmals wiederholt. Dabei befindet sich an jeder Ecke 9' jeder Grundzelle 8' jeweils ein Einsteckloch 7'.

Während dieses Raster mit einer quadratischen Grundzelle 8' an die Felder auf dem Spielbrett eines Schachspiels erinnert, ließe sich ein Raster auch aus einer dreidimensionalen Grundzelle entwickeln, wobei man sich beispielsweise vorstellen könnte, dass das Raster aus Fig. 2 zusätzlich zu den horizontalen und vertikalen Linien 10', 11' noch durch in einer Diagonalrichtung verlaufende Linien durchzogen ist, welche in einer diagonalen Reihe liegende Ecken 9' untereinander verbindet.

Während bei dem zuletzt geschilderten Raster mit einer dreieckigen Grundzelle dieses Grundzellen-Dreieck rechtwinklig und gleichschenklig ist, besteht auch die Möglichkeit, ein Raster aus einer dreieckigen, gleichseitigen Grundzelle zu entwickeln, die ähnlich wie auf dem Spielbrett des sogenannten Halmaspiels wiederholt nebeneinandergesetzt ist.

Dabei teilen sich jeweils sechs derartige Grundzellen-Dreiecke eine gemeinsame Ecke. Fasst man jeweils diese sechs in einer gemeinsamen Ecke zusammenlaufenden, gleichseitigen Grundzellen-Dreiecke zu einem Sechsecke. zusammen, so entfällt die gemeinsame Ecke, und man erhält daraus ein Grundzellen-Sechseck, welches sich zu dem bekannten sechseckigen Wabenmuster aneinanderreihen und nahtlos zusammenfügen lässt.

Ein wiederum anderes Raster baut auf konzentrischen Kreisen 12' auf, welche in Fig. 2 eingezeichnet sind und sich um ein gemeinsames Zentrum 13' scharen.

Von Vorteil ist, wenn dieses gemeinsame Zentrum 13', was nicht immer mit einer Bohrung versehen sein muss, sowie die Einstecklöcher 7 und Markierungen 12 in der Stützeinheit 2 so aufeinander abgestimmt angeordnet sind, dass diese einen Bezug, insbesondere einen zentrischen. Bezug zu einem fixen Punkt in der Untersuchungseinheit oder in bzw. zu anderweitigen Objekten haben, wie z.B. in einem Kreuztisch, zu einem Referenz- oder Mittelpunkt einer Positioniervorrichtung, etc.

Sind diese z.B. auf den Mittelpunkt oder eine Achse des Manipulators in einem CT abgestimmt, markieren die aufgebrachten Kreise 12 das Messfeld, bzw. einen Rekonstruktionszylinder, und es können die Prüflinge mittig bzw. zentrisch angeordnet werden, so dass ein Nachkorrigieren eingespart werden kann. Hierdurch kann ggf. auf teure Einrichtplätze oder Rüsttische für das Zentrieren der Proben verzichtet werden.

Eine solche Schar kreisförmiger Linien 12', welche eine Positionierung von runden Teilen erleichtert oder dabei hilfreich ist, könnte durch eine Schar von sternförmig aus eben diesem Zentrum 13' ausgehenden Strahlen ergänzt werden zu einem zweidimensionalen Raster mit Schnittpunkten zwischen den verschiedenen Linienscharen, welche jeweils den Ort eines Einstecklochs 7' markieren.

Bei der Anordnung gemäß Fig. 2 wird jedoch die Schar von kreisförmigen Linien 12' stattdessen kombiniert mit einem Raster aus horizontalen und vertikalen Linien 10', 11'.

Wie man Fig. 2 weiter entnehmen kann, können einzelne Linien 10', 11' einer Linienschar gekennzeichnet sein, beispielsweise durch unterschiedliche Symbole. In Fig. 2 sind die horizontalen Linien 10' mit fortlaufenden Zahlen durchnummeriert, und die vertikalen Linien 11' mit Buchstaben, welche nach dem Alphabet geordnet sind. Man kann daher jedem Schnittpunkt dieses Rasters und also auch dem dortigen Einsteckloch 7' genau eine eindeutige Kombination aus einer Zahl und einem Buchstaben als Koordinaten zuordnen. Beispielsweise hat das Einsteckloch 7' im Zentrum 13' die Koordinaten G7 bzw. 7G. Bei Verwendung unterschiedlicher Symbole wie Buchstaben und Zahlen ist dabei deren Reihenfolge beliebig wählbar. Es können die unterschiedlichsten Markierungen verwendet werden: Es sollte allenfalls darauf geachtet werden, dass Verwechslungen möglichst ausgeschlossen sind.

Die rasterförmig angeordneten Einstecklöcher 7, 7' dienen vornehmlich dem Einstecken von Einsteckschäften 19 von Anlagestäben oder -elementen 14, an welchen das (die) zu untersuchende(n) Messobjekt(e) 3 angelehnt werden kann (können), sowie zur Fixierung und/oder Halterung von Anlageelementen 14, welche zur Ausrichtung eines oder mehrerer auf der Stützplatte 2, 2' aufgelegter Messobjekte .3 verwendet werden können. Diese Anlageelemente 14 wie auch die oben erwähnten Einsteckschäfte 19 werden weiter unten ausführlicher beschrieben.

In Fig. 1 ist weiter erkennbar, dass eine Stützplatte 2, 2' zusätzlich zu den rasterförmig angeordneten Einstecklöchem 7, 7' noch sogenannte Aufstecklöcher 15 aufweisen kann, welche dem Aufstecken der betreffenden Stützplatte 2, 2' auf je einem von mehreren, vorzugsweise etwa vertikal empor ragenden Haltestäben 16 dienen.

Zu diesem Zweck können die Querschnitte bzw. Durchmesser der Aufstecklöcher 15 an den Querschnitt bzw. Durchmesser eines Haltestabs 16 angepasst sein, während die Querschnitte bzw. Durchmesser der Einstecklöcher 7, 7' an den Querschnitt bzw. Durchmesser eines Einsteckschaftes 19 angepasst sind.

Von besonderem Vorteil ist es dabei, wenn die Einstecklöcher 7, 7' hinsichtlich ihres Durchmessers stets etwas kleiner bemessen sind als der Durchmesser der darin aufzunehmenden Einsteckschäfte 19, 19'. Dadurch erreicht man eine ständige Klemmwirkung, eine Reibungskraft zwischen den beiden Elementen 7, 7'; 19, 19'.

Diese Klemmwirkung sorgt für einen spielfreien Kontakt zwischen dem betreffenden Stützelement 2, 2' und den Einsteckschäften 19, 19', was für eine präzise Untersuchung der Messobjekte 3 nicht nur sehr wichtig ist, sondern geradezu eine Vorraussetzung darstellt.

Reicht diese Klemmwirkung bzw. Reibungskraft nicht aus, können die Einstecklöcher auch als Schraubengewinde ausgeführt sein, in welche anstelle des Einsteckens von Einsteckschäften dann Schrauben hineingeschraubt werden können. Mit dieser Technik können nicht nur die Anlageelemente 14, 14' an den Stützeinheiten 2, 2' fixiert werden, sondern auch letztere mit den Haltetäben 16 verbunden werden.

Ein Vorteil von kleineren Einstecklöchern 7, 7', 29 ist es, den dadurch entstehenden Reibschluss zum Halten zu nutzen.

Bevorzugt gibt es jedoch noch weitere Unterschiede zwischen den Einstecklöchern 7, 7' und den Aufstecklöchern 15:
Die Aufstecklöcher 15 durchsetzen die Stützplatte 2, 2' vollständig, während dies bei den Einstecklöchern 7, 7' nicht notwendig ist; vielmehr können letztere auch als Sacklöcher ausgebildet sein.

Besonders hervorgehoben werden sollte jedoch, dass die Einstecklöcher 7, 7' die ebene Oberseite 4, 4' der betreffenden Stützplatte 2, 2' lotrecht durchsetzen sollten, während dies für die Aufstecklöcher 15 nicht notwendig ist. Mehr noch - die Aufstecklöcher 15 sollten in der Tat mit dem Lot an die ebene Oberseite 4, 4' der betreffenden Stützplatte 2, 2' einen von null unterschiedlichen Zwischenwinkel einschließen, beispielsweise einen Zwischenwinkel von 1° bis 85°, oder von 1° bis 45°, oder einen Zwischenwinkel von 2° bis 30°, oder einen Zwischenwinkel von 5° bis 20°, oder einen Zwischenwinkel von 10° bis 15°. Dieser Zwischenwinkel soll bei allen Aufstecklöchern 15 in gleicher Größe und in gleicher Richtung je Stützplatte, vorhanden sein, so dass die Längsachsen aller Aufstecklöcher 15 parallel zueinander sind. Zwar können die Aufstecklöcher 15 einer Stützplatte 2, 2' auch andere Zwischenwinkel aufweisen, diese sollten dann aber auf die Ausrichtung und/oder Position der Haltestäbe 16 abgestimmt sein.

Eine andere Möglichkeit, die Stützplatten unter den oben genannten Winkeln zu positionieren, welche nicht in der Fig. 1 dargestellt ist, umfasst wenigstens einen Adapter, dessen Oberseite unter dem oben genannten Winkel gegenüber der Horizontalen geneigt ist. Solche Adapter können unterschiedliche Gestalten aufweisen. Besonders bewährt haben sich quadratische, rechteckige oder zylindrische Adapter, welche mit ihrer Unterseite auf unterschiedlichste Weise befestigt werden können. An Ihrer Oberseite haben diese auf die Stützplatten 2 abgestimmte Montageinrichtungen, um diese dann auf dem betreffenden Adapter zur montieren. Bei dieser Form der Befestigung der Stützplatten 2 auf solchen Adaptern mit geneigten Oberseiten ist es von Vorteil, wenn die Längsachsen dortiger Befestigungslöcher lotrecht zu der Oberseite des betreffenden Adapters verlaufen.

Eine andere Ausführungsform der Erfindung, welche in der Zeichnung nicht dargestellt ist, ermöglicht es, einen flexiblen, jederzeit verstellbaren Neigungswinkel der Stützplatte 2 einzustellen. Hierfür können die Aufstecklöcher 15 als Langlöcher und oder sogar als Schlitze ausbildet sein. Dabei empfiehlt es sich, die Breite der Langlöcher und/oder Schlitze sowie auch deren Relativpositionen auf die jeweiligen Durchmesser und Relativpositionen der Haltestäbe 16 auf der Grundplatte abzustimmen.

Die Verwendung von Schlitzen ermöglicht zudem noch ein Einsetzen der Stützplatte, da die Haltestäbe immer in die Aufstecklöcher und Langlöcher eingeführt werden müssen.

Von Vorteil ist es, die Aufstecklöcher 15, Langlöcher sowie die Schlitze hinsichtlich ihrer Breite immer etwas kleiner zu bemessen als den Durchmesser eines Haltestabs 16. Dadurch erreicht man eine ständige Klemmwirkung bzw. Reibungskraft zwischen den beiden Elementen, was abhängig vom Gewicht des zu untersuchenden Messobjektes 3 ausreichen kann, um jenes zu tragen.

Diese Klemmwirkung zwischen den Haltestäben 16 und den jeweiligen Aufstecklöchern 15 sorgt außerdem für einen spielfreien Kontakt, der für die Untersuchung der Proben bzw. Messobjekte 3 sehr wichtig und geradezu eine Vorraussetzung ist.

Reicht diese Klemmwirkung bzw. Reibungskraft zur Einhaltung der Position einer Stützplatte nicht aus, kann jene durch das Anbringen der bereits erwähnten Fixierungselementen 26 abgestützt und gehalten werden.

Demnach sollten einerseits die Längsachsen aller Einstecklöcher 7, 7' einer Stützplatte 2, 2' untereinander parallel sein, und die Längsachsen aller Aufstecklöcher 15 sollten ebenfalls untereinander parallel verlaufen; dies gilt jedoch nicht für ein Paar aus je einem Ein- und Aufsteckloch 7, 7', 15 untereinander - diese müssen nicht parallel zueinander sein, wenngleich dies auch möglich ist.

Der Zweck und ein weiterer Aspekt eines von null verschiedenen Zwischenwinkels zwischen der Längsachse eines Aufstecklochs 15 gegenüber dem Lot an die ebene Oberseite 4, 4' einer Stützplatte 2, 2' besteht darin, dass die Untersuchung eines Messobjektes 3 dadurch unter einer entsprechenden Neigung erfolgt, was aufgrund der Bestandteile und der Geometrie des zu untersuchenden Messobjektes 3 eine vorteilhafte Ausrichtung darstellen und sich auf die Ergebnisse positiv auswirken kann.

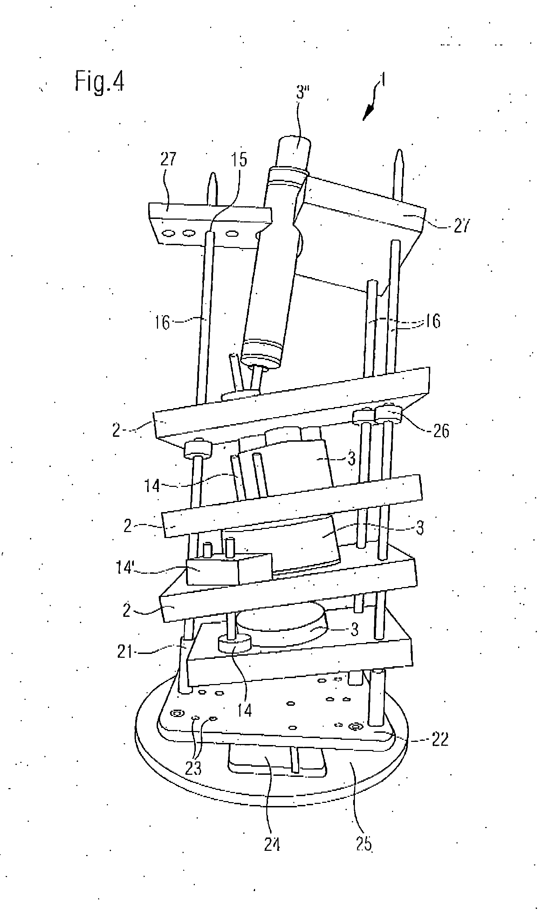

Der Zweck des von null verschiedenen Zwischenwinkels der Längsachse eines Aufstecklochs 15 gegenüber dem Lot an die ebene Oberseite 4, 4' einer Stützplatte 2, 2' besteht darin, dass sich nach dem Aufstecken auf den vorzugsweise vertikal empor ragenden Haltestäben 16 eine geneigte Ausrichtung der betreffenden Stützplatte 2, 2' ergibt, wie dies gut in Fig. 4 zu sehen ist. Infolgedessen erfahren die auf einer solchen geneigten Stützplatte 2, 2' aufgelegten Mesobjekte 3 eine Hangabtriebskraft, welche sie gegen in die Einstecklöcher 7, 7' der betreffenden Stützplatte 2, 2' eingesteckte Anlageelemente 14 presst und damit selbsttätig justiert.

In den Figuren 1 und 2 haben sowohl die Einstecklöcher 7, 7' als auch die Aufstecklöcher 15 jeweils einen kreisförmigen Querschnitt. Insbesondere kann der von der Längsachse eines Aufstecklochs 15 lotrecht durchsetzte kreisförmige Querschnitt des Aufstecklochs 15 an den ebenfalls kreisförmigen Querschnitt eines Haltestabs 16 angepasst sein.

Von Vorteil ist es, die Aufstecklöcher 15, Langlöcher sowie die Schlitze hinsichtlich ihrer jeweiligen Breite immer etwas kleiner zu dimensionieren als den Durchmesser eines Haltestabs 16. Dadurch erreicht man eine ständige Klemmwirkung, d.h. eine Reibungskraft zwischen beiden Elementen, was abhängig vom Gewicht eines zu untersuchenden Messobjektes 3 ausreichen kann, um jenes zu tragen.

Diese Klemmwirkung kann außerdem für einen spielfreien Kontakt sorgen, der für die Untersuchung der Proben sehr wichtig ist und zumeist eine Vorraussetzung ist.

Reicht diese Klemmwirkung oder Reibungskraft zur Positionshaltung der Stützplatten 2, 2' dagegen nicht aus, so kann diese durch Anbringen der bereits erwähnten Fixierungselementen 26 gesteigert werden.

Je nach der gewünschten Reibungskraft zwischen diesen Elementen 15, 16 kann der Durchmesser eines solchen Aufstecklochs 15 auch kleiner gewählt sein als der Außendurchmesser eines Haltestabs 16, insbesondere wenn die betreffende Stützplatte 2, 2' aus einem zumindest geringfügig elastischen Material besteht, so dass sich das betreffende Aufsteckloch 15 beim Aufstecken auf einen Haltestab 16 geringfügig aufweiten kann. Die dabei entstehende elastische Rückstellkraft hat einen Anpressdruck zwischen Aufsteckloch 15 und Haltestab 16 zur Folge, was die Reibungskraft erhöht.

Ähnliches kann auch für die Einstecklöcher 7, 7' gelten.

Eine ähnliche Wirkung ergibt sich, wenn die Aufstecklöcher 15 zu einer Seite der Stützplatte 2, 2' hin versetzt sind. Die zur Verbindungslinie dieser Aufstecklöcher 15 asymmetrische Gewichtsverteilung der Stützplatte 2, 2' hat ein Kippmoment zur Folge, welches bestrebt ist, die Stützplatte 2, 2' von ihrer ursprünglich horizontalen oder um den Zwischenwinkel der Aufstecklöcher 15 gegenüber dem Lot an die Oberseite 4, 4' der Stützplatte 2, 2' geneigten Lage in eine steilere Position zu verstellen. Durch ein solches Kippmoment ergibt sich eine Klemmwirkung im Bereich zwischen den Aufstecklöchern 15 und den Haltestäben 16, welche die dortige Reibungskraft zusätzlich steigert.

Diese Reibungskraft sollte ausreichend sein, um die Stützplatte 2, 2' zusammen mit dem darauf festgelegten, zu untersuchenden Messobjekt 3, 3' an den Haltestäben 16 zu halten.

Bei Ein- und Aufstecklöchern 7, 7', 15 kann umgekehrt auch vorgesehen sein, dass der Querschnitt nicht kreisrund ist, sondern bspw. mehreckig. Dadurch kann die Kontaktfläche mit dem einzusteckenden Element reduziert werden, wenn sich zwischen einem einzusteckenden Element mit einem kreisförmigen Querschnitt und einem Ein- und Aufsteckloch 7, 7', 15 mit einem anderen, beispielsweise mehreckigen Querschnitt entlang des Umfangs Taschen bzw. räumlich begrenzte Spalte ergeben.

Schließlich gibt es auch noch die Möglichkeit, dass zwar die Ein- oder Aufstecklöchern 7, 7', 15 einen kreisförmigen Querschnitt aufweisen, aber das jeweils einzusteckende Element, also ein Anlageelement 14 oder ein Haltestab 16, einen von der Kreisform abweichenden, insbesondere mehreckigen Querschnitt aufweist. Auch dadurch werden Taschen bzw. räumlich begrenzte Spalte geschaffen, so dass die Reibung reduziert werden kann, ohne dass dadurch ein Spiel geschaffen wird, welches die Positioniergenauigkeit beeinträchtigen könnte.

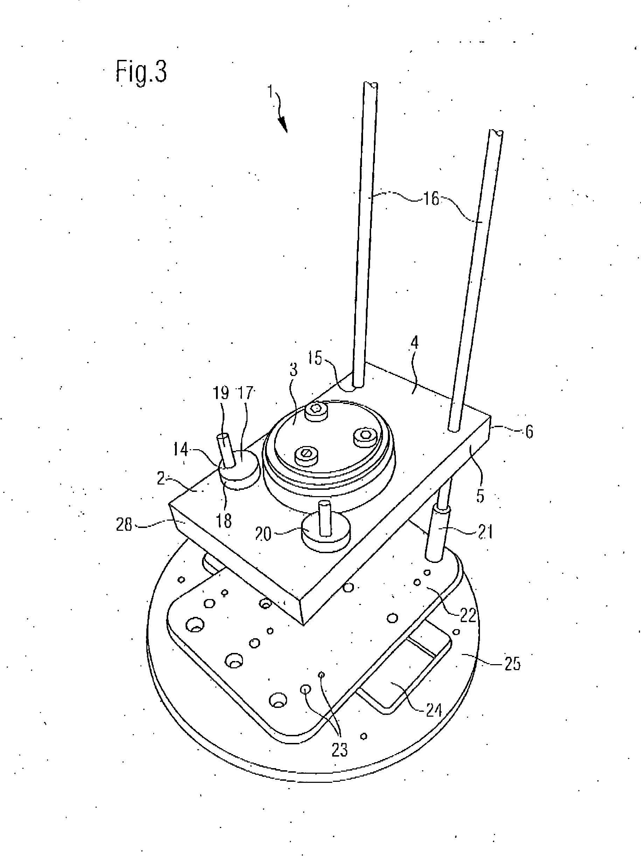

In Fig. 3 sind beispielhaft zwei Anlageelemente 14 zu sehen. Diese sind in mehrere Abschnitte untergliedert. Zentraler Bestandteil ist ein scheibenförmiger Abschnitt 17, welcher in dem dargestellten Beispiel eine kreisförmige Grundfläche aufweist sowie eine konstante Dicke. Bevorzugt besteht ein solches Anlageelement vorzugsweise aus einem Material von geringer spezifischer Dichte, so dass es beispielsweise bei einer Röntgenmessung nicht störend hervortritt. Die hierfür bevorzugten Dichten wurden bereits beschrieben; Anlageelemente können beispielsweise aus Rohacell, Aluminium, Kunststoff, sowie aus geschäumten Materialien, Styropor, Styrodur, etc. oder aus Balsaholz bestehen.

Exzentrisch zu dem Mittelpunkt seines kreisförmigen Umfangs 18 weist der scheibenförmige Abschnitt 17 einen lotrecht zu der Scheibenebene auskragenden Schaft 19 auf, der an einer oder beiden Grundseiten 20 über den scheibenförmigen Abschnitt 17 übersteht. Im dargestellten Ausführungsbeispiel steht dieser Schaft 19 an beiden Seiten 20 über; der unten überstehende Schaftabschnitt ist jedoch in Fig. 3 nicht sichtbar, weil er gerade in eine Einsteckausnehmung 7 der Stützplatte 2 eingesteckt ist. Der oben überstehende Schaftabschnitt 19 kann als kleiner Griff benutzt werden, um das Anlageelement 14 zu platzieren oder zu drehen.

In Fig. 3 ist erkennbar, dass nach dem Aufstecken der Stützplatte 2 auf wenigstens zwei Haltestäbe 16 ein Messobjekt 3 auf die dann leicht geneigte Stützplatte 2 aufgelegt werden kann. Anhand von beispielsweise kreisförmigen Markierungslinien 12' oder sonstigen Markierungen kann erreicht werden, dass sich das Messobjekt 3 möglichst genau auf dem Zentrum 13' der Stützplatte 2 befindet, welches wiederum auf das Messzentrum der Mess- und Untersuchungseinheit abgestimmt sein kann bzw sollte.

Sofern dies nicht bereits zuvor geschehen ist, können nun zwei Anlageelemente14 an geeigneten Einstecklöchern 7, 7' fixiert werden, damit das Messobjekt 3 nicht von der geneigten Stützplatte 2 herabrutschen kann.

Aufgrund ihrer Exzentrizität besteht sodann noch die Möglichkeit, die Anlageelemente 14 in ihren Einstecklöchern 7, 7' derart zu drehen, dass sie gerade eben in Kontakt mit dem Messobjekt 3 treten, ohne dieses aus seiner gewünschten, beispielsweise zentralen Lage zu verschieben; durch Drehen solcher exzentrischer Anlageelemente 14 besteht überdies die Möglichkeit, ein Messobjekt 3 auf der Stützeinheit 2 zu zentrieren.

In Fig. 3 ist ferner zu sehen, wie die Haltestäbe 16 ihrerseits fixiert sind. Dazu sind dieselben an ihren unteren Enden mit einer Fixierungseinrichtung versehen, vorzugsweise mit einem Gewinde, insbesondere einem Außengewinde. Dieses Außengewinde kann bei einem massiven Haltestab 16 aus beispielsweise Aluminium direkt in diesen eingeschnitten sein. Falls der betreffende Haltestab 16 rohrförmig ausgebildet ist, beispielsweise aus einem Gewebe aus Kohlenstoffasern, so kann das Gewinde an einem mit dem Haltestab 16 verbindbaren, massiven Teil 21 eingearbeitet sein. Dieses massive Teil 21 kann entweder in den rohrförmigen Haltestab 16 eingesteckt und darin fixiert sein, beispielsweise verklebt, oder es weist seinerseits ein oberseitiges Sachloch auf, so dass der Haltestab 16 darin wie in eine Hülse eingesteckt und sodann fixiert werden kann, beispielsweise mittels Klebstoff.

Zur eigentlichen Fixierung dient eine Grundplatte 22, die vorzugsweise aus Metall, Alu, Kunststoff, Carbon besteht oder aus einem ähnlich formstabilen Material. Diese Grundplatte 22 weist an mehreren Stellen Einstecköffnungen 23 auf, die vorzugsweise mit einem Innengewinde versehen sind, so dass ein Haltestab 16 mit seinem unterseitigen Gewinde darin festschraubbar ist.

Eine weitere Möglichkeit, einen Haltestab 16 auf der Grundplatte 22 zu montieren, besteht darin, Schrauben durch Bohrungen in der Unterseite der Grundplatte zu stecken und diese dann in die mit Gewinde versehenen Unterseiten der Haltestäbe 16 zu schrauben und fest zu ziehen.

Dabei ist darauf zu achten, dass der Abstand zwischen zwei Einstecköffnungen 23 dem Abstand zwischen zwei Aufstecköffnungen 15 einer Stützplatte 2, 2' entspricht, so dass der Abstand der Haltestäbe 16 genau dem Abstand zwischen den Aufstecköffnungen 15 entspricht und eine Stützplatte 2, 2' ohne Probleme auf mehrere Haltestäbe 16 gleichzeitig aufgesteckt werden kann.

Wie in. Fig. 3 weiter erkennbar ist, kann die Grundplatte 22 auf einem Kreuztisch 24 angeordnet sein, oder mit einem Kreuztisch 24 verbunden oder integriert sein, so dass ihre horizontale Position in ein oder vorzugsweise zwei Richtungen eingestellt werden kann.

Dasbei sollte die Position der Aufstecklöcher 15 an einer Stützplatte 2 und die Position der Haltestäbe 16 an einer Grundplatte und/oder gegenüber einem Kreuztisch derart vorgegeben sein, und kreisförmige Markierungen, beispielsweise die Kreislinien 12, sowie ggf. auf einer solchen Kreislinie 12 angeordnete Einstecklöcher 7 sollten derart um einen Referenz-,oder Mittelpunkt angeordnet sein, dass dieser Referenz- oder Mittelpunkt auf den Messmittelpunkt der Mess- oder Untersuchungseinheit einstellbar ist.

Von Vorteil ist es, die Grundplatte 22 an der Unterseite mit Magneten zu versehen. Dies hat den Vorteil, dass die Grundplatte 22 als oberer Schlitten eines, wie in der Patentschrift EP 3257621 des Erfinders offenbarten Kreuztisches ausgebildet bzw. damit integriert sein kann; aber auch eine Montage an / auf magnetischen Flächen ist damit ermöglicht, bzw. das Aufsetzen und Verschieben, um das (die) zu untersuchende(n) Messobjekt(e) 3 für die Untersuchung auszurichten, zu positionieren und/oder zu zentrieren.

Bei codierten Löchern und Verwendung des Kreuztisches muss bei runden Teilen oder bei symmetrischen Teilen nur in eine Richtung zentriert werden, da diese Teile durch die Rasterlöcher schon gemittelt werden können. Das Zentrieren wird dadurch erleichtert.

Bei Löchern oder codierten Löchern ist es bei geschäumten Materialien, insbesondere bei geschäumten Blöcken oder Platten wie Rohacell möglich, diese mit einer Lochplatte, glatten Lochplatte oder einer Folie mit den codierten Löchern auf der Unterseite zu montieren, wodurch das Auffinden der vorgegebenen Löcher in der Stützeinheit erleichtert wird.

Der Kreuztisch 24. seinerseits kann an einer Montageplatte 25 oder an einem sonstigen Adapter einer in der Zeichnung nicht dargestellten Messeinrichtung festgelegt werden.

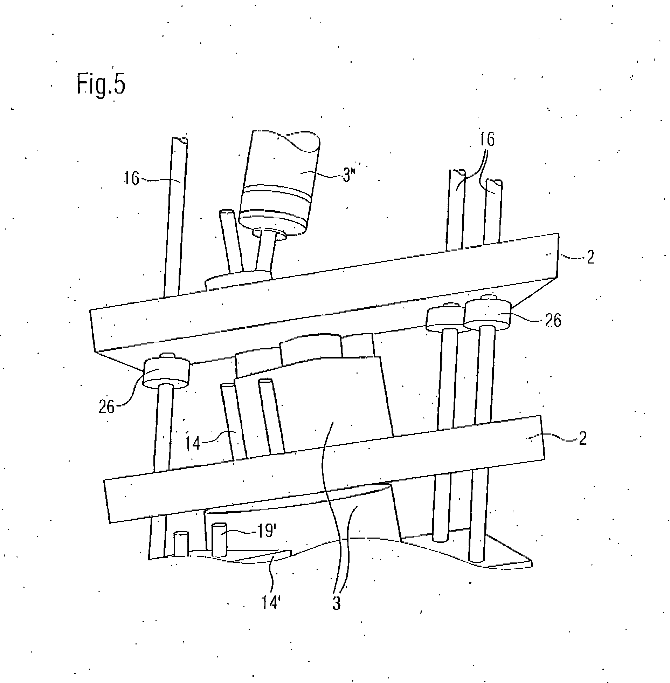

Die in den Figuren 4 und 5 wiedergegebene Anordnung unterscheidet sich von der Anordnung gemäß Fig. 3 vor allem dadurch, dass hier drei Haltestäbe 16 an der Grundplatte 22 fixiert sind, und zwar an drei Einstecköffnungen 23, welche sich an den Ecken eines Dreiecks befinden und also nicht in einer gemeinsamen Flucht liegen.

Auch bei Verwendung von nur zwei Haltestäben 16 können mehrere Stützplatten 2, 2' übereinander aufgesteckt und angeordnet werden

Auf diesen insgesamt mindestens zwei bis drei Haltestäben 16 sind sodann mehrere Stützplatten 2, 2' übereinander aufgesteckt, und zwar derart, dass ihre Grundebenen gegenüber der Horizontalen geneigt sind. Wie oben bereits ausgeführt, ist diese Neigung eine Folge des Neigungswinkels der Längsachsen der Aufstecklöcher 15 in den Stützplatten 2, 2', welche die Oberseite 4, 4' der jeweiligen Stützplatte 2, 2' nicht exakt lotrecht durchsetzen.

Bei Verwendung von nur zwei Haltestäben 16 kommt es bei geneigten Stützplatten 2, 2' zu einem Kippeffekt, d.h. zu einem Kippmoment, das eine erhöhte Klemmwirkung in dem Bereich zwischen den Aufstecklöchern 15 und den Haltestäben 16 nach sich zieht, wodurch die dortige Reibungskraft erheblich gesteigert wird.

Man erkennt ferner, dass die einzelnen Stützplatten 2, 2' in bestimmten Höhen entlang der Haltestäbe 16 fixiert sind.

Dazu könnte einerseits die eigene Reibungskraft eines zu eng bemessenen, d.h. nach Art einer Presspassung gestalteten Aufsteckloch 15 in einer Stützplatte 2, 2' dienen, so dass die Stützplatten 2, 2' in jeder Höhe reibschlüssig festgelegt werden können.

Andererseits ist es auch möglich, dies mittels ringförmiger Fixierungselemente 26 zu bewirken, welche je einen Haltestab 16 unmittelbar unterhalb einer Stützplatte 2, 2' umfassen und an jenem festgelegt sind, beispielsweise mittels nicht dargestellter Klemmschrauben.

Dazu kann je eine Klemmschraube entweder radial in ein ringförmiges Fixierungselement26 eingeschraubt werden, bis ihre freie Stirnseite radial gegen den umgriffenen . Haltestab 16 gepresst wird, oder ein ringförmiges Fixierungselement 26 ist quer zu seiner Grundebene mit einem durchgängigen, spaltförmigen Schlitz versehen, und mittels einer eines der beiden Ringenden durchgreifenden und in dem anderen Ringende einschraubbaren Klemmschraube werden die beiden Ringenden zusammengezogen, wodurch sich der lichte Querschnitt innerhalb des ringförmigen Fixierungselements 26 verringert und dieses in der betreffenden Höhe an dem Haltestab 16 festgeklemmt wird.

Verwendet man Stützplatten 2 mit gleicher Anordnung der Aufstecklöcher, und stapelt man die Stützplatten 2 mit gleichen Prüflingen vertikal übereinander, so kann man die erste gerasterte Stützplatte 2, welche mit Haltestäben 16, Anlageelementen 14 und mit dem (den) positionierten und ausgerichteten Prüfling(en) bestückt ist, auf die anderen, in gleicher Form gerasterten Stützplatten 2 übertragen bzw. reproduzieren und kann somit einander entsprechende Teile bzw. Prüflinge genau übereinander an der gleichen Horizontalpäsition stapeln.

Wie Fig. 4 zeigt, kann jede Stützplatte 2, 2' wenigstens ein Messobjekt 3 abstützen, so dass sich eine Anordnung mit mehreren Etagen ergibt, wobei auf jeder Etage wenigstens ein Messobjekt 3 mit gleicher oder unterschiedlicher Geometrie platziert sein kann.

Bei Verwendung einer Messeinrichtung, deren Montageplatte 25 oder deren sonstiger Adapter bzw. Halterung in vertikaler Richtung definiert verfahrbar ist, beispielsweise mittels eines Stell- oder Schrittmotors; kann sodann nach Abschluss einer Messung die gesamte Anordnung in vertikaler Richtung verfahren werden, bis sich das nächste Messobjekt 3 an einer vorgegebenen Position befindet und gemessen werden kann.

Im oberen Bereich von Fig. 4 ist ferner zu sehen, dass mit einer erfindungsgemäß verwendeten Anordnung nicht nur flache Messobjekte 3 fixiert werden können, sondern auch langgestreckte Messobjekte 3', welche in einer etwa vertikalen. Ausrichtung gehalten werden müssen. Zu diesen Zweck können an den Haltestäben 16 auch andere Adapter und/oder Positionierhilfen und/oder Anlageelemente 27 aufgesteckt werden, welche auch eine Plattenform aufweisen können, jedoch vorzugsweise kleiner sein können als die übrigen Stützplatten 2, 2'.

Ferner ist es möglich, zu diesem Zweck auch Stützplatten 2, 2' vorzusehen, welche eine Durchsteckausnehmung entsprechender Größe zum Hindurchstecken eines aufrecht" stehenden Messobjektes 3' aufweisen. Ein solches Messobjekt 3' kann dann entweder an dem inneren Rand einer solchen Durchsteckausnehmung angelehnt werden, oder es wird mit speziellen Anlageelementen zusätzlich fixiert.

Dafür eignen sich beispielsweise längliche oder langgestreckte Anlageelemente 14', von denen eines in Fig. 4 auf der zweituntersten Stützplatte 2, 2' zu sehen ist. Ein solches langgestrecktes Anlageelement 14' kann zwei oder mehr Einstecklöcher 29, 29' aufweisen, welche auf die Einstecklöcher 7, 7'der Stützeinheit 2, 2' hinsichtlich ihrer Relativanordnung abgestimmt sind, so dass ein solches Anlageelement 14' mittels zweier miteinander fluchtender Einstecklöcher 7, 7' durchgreifender Einsteckschäfte 19, 19' an der betreffenden Stützeinheit 2,2' festgelegt werden kann, und könnte beispielsweise für eine zusätzliche Fixierung eines Messobjektes 3' in einer Durchsteckausnehmung verwendet werden.

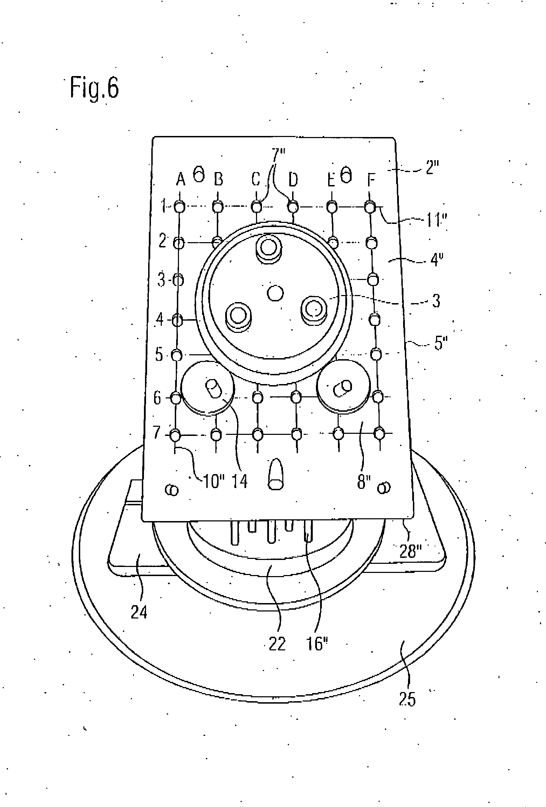

Schließlich ist in Fig. 6 eine weitere Ausführungsform einer erfindungsgemäß verwendeten Vorrichtung 1" zu sehen. Die dortige Stützplatte 2" ähnelt der Stützplatte 2' aus Fig. 2. Jedoch sind hierbei nicht alle Ein- oder Aufstecklöcher 7", 15" allein in der Oberseite 4" der Stützplatte 2" angeordnet. Vielmehr befinden sich einige Aufstecklöcher 15" auch in einer Stirnseite 28, und ihre Längsachsen sind gegenüber der Plattengrundebene bzw. der Plattenoberseite 4" relativ gering geneigt, also insbesondere um einen Winkel von weniger als 90°. Dadurch ist die Oberseite 4" einer solchen, an vertikal ausgerichteten Haltestäben 16" aufgesteckten Stützplatte 2" gegenüber der Horizontalen relativ steil geneigt.

Um eine solche steile Neigung innerhalb der relativ schmalen Plattenstirnseite 28 sicher zu stabilisieren, ist hierbei zusätzlich vorgesehen, anstelle von wenigen dicken Haltestäben 16 mehrere dünne, insbesondere dornartige Haltestäbe 16" vorzusehen, die in einer Grundplatte 22" fixiert sein können, beispielsweise eingegossen oder eingeklebt oder eingeschraubt.

Während bei den vorangehenden Ausführungsformen die Aufstecklöcher 15 vorzugsweise einen größeren Durchmesser aufweisen als die Einstecklöcher 7, 7', kann dies bei der folgenden Ausführungsform anders sein. Hier kann der Durchmesser eines Aufstecklochs 15" auch dem Durchmesser eines Einstecklochs 7" der betreffenden Stützplatte 2" entsprechen oder sogar kleiner sein als jener.

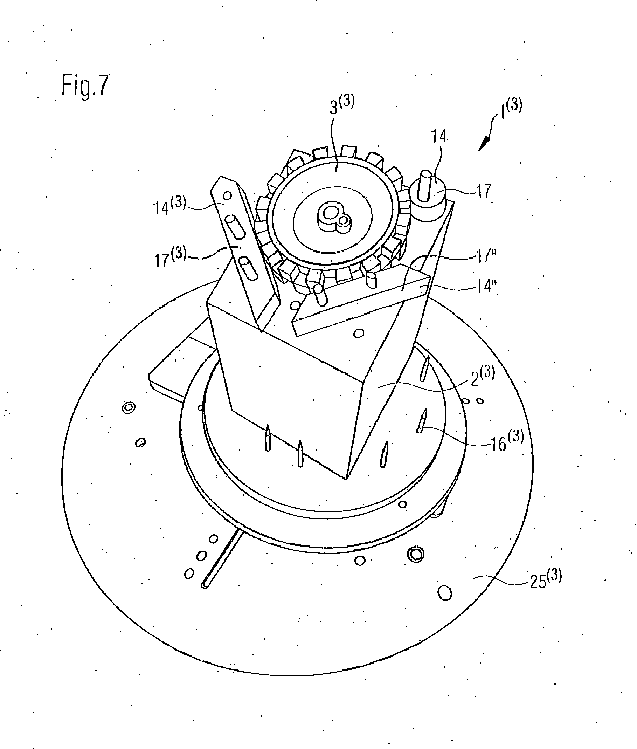

Die Halte- und Positioniervorrichtung 1⁽³⁾ gemäß Fig. 7 unterscheidet sich von der in Fig. 6 dargestellten Vorrichtung 1" vor allem dadurch, dass anstelle einer Stützplatte 2" ein Stützblock 2⁽³⁾ Verwendung findet. Wie man sieht, kann ein solcher Stützblock 2⁽³⁾ ganz unterschiedliche Geometrien aufweisen, z.B. eine eher würfel- oder quaderförmige Geometrie, oder auch eine pultförmige Geometrie, wobei die Oberseite nicht parallel zur Unterseite ist, etc.

Im vorliegenden Beispiel haben die Haltestifte 16⁽³⁾ ebenfalls eine etwa dornartige Geometrie, ähnlich der Haltestifte 16" aus Fig. 6. Wie dort, so müssen auch bei dieser Ausführungsform die Aufstecklöcher nicht durchgehend ausgebildet sein, sondern enden stumpf innerhalb des betreffenden Stützblocks 2⁽³⁾.

Ein solcher Stützblock 2⁽³⁾ kann auch als Adapterblock zum Halten von anderen Stützplatten 2 verwendet werden, bspw. indem daran Haltestäbe 16 fixierbar, insbesondere einsteckbar sind.

Solche Stützblöcke 2⁽³⁾ bzw. Adapterblöcke sind bevorzugt an ihrer Unterseite 26 eben, d.h. plan, und können auf Halteeinrichtungen oder Grundplatten montiert werden. In Fig. 7 ist ein solcher Stützblock 2⁽³⁾ oder Adapterblock auf eine codierte Dornplatte gesteckt bzw. darauf montiert. Diese Dornplatte ist bevorzugt ihrerseits auf einer Montageplatte eines Kreuztisches fixiert. Allerdings können erfindungsgemäß verwendete Stütz- oder Adapterblöcke 2⁽³⁾ auch auf andere Weise in einer Mess- oder Untersuchungseinrichtung positioniert oder fixiert werden.

Die Oberseite eines solchen Stütz- oder Adapterblocks 2⁽³⁾ sollte vorgegebene Eigenschaften aufweisen wie z.B. eine Neigung zwischen .0° und 90°, sowie ferner mit Aufstecklöchern 15 für Haltestäbe 16 und/oder mit Markierungen versehen sein, wie diese schon vorher bei Stützplatten 2 beschrieben wurden. Die Stützplatten 2 können auf unterschiedlich geneigten Adapterblöcken 2⁽³⁾ montiert werden.

Diese Ausführungsform ermöglicht den Einsatz von größeren und dickeren und damit tragfähigeren Stützplätten 2.

In Verbindung mit einem tragfähigen Stütz- oder Adapterblock 2⁽³⁾ können auch größere und/oder höhere Prüflinge positioniert und bspw. mittels Anlage- oder Haltestäben 16 gehalten oder abgestützt werden.

Bei eine weiteren, nicht dargestellten Ausführungsform der Erfindung können die Stützplatten 2 durch Verwendung eines Stütz- oder Adapterblocks 2⁽³⁾ mit einer geneigten Oberseite auf Ihre gewünschte Neigung und Position gebracht werden. Ein solcher Stütz- oder Adapterblock 2⁽³⁾ kann unterschiedliche Grundflächen aufweisen, wie z.B. rechteckig, quadratisch, rund, etc., und solche Adapterblöcke 2⁽³⁾ bestehen bevorzugt ebenfalls aus einem Material mit geringer Dichte, so wie die Stützeinheiten 2 selbst.

Ein solcher Adapterblock 2⁽³⁾ kann durch die vorgegebene Neigung seiner Oberseite ggf. auch die Aufgabe der Neigung der Stützeinheiten 2 übernehmen, die ansonsten durch das Zusammenwirken der Haltestäbe 16 mit geneigt verlaufenden Aufstecklöchern 15 erzielt wird. Ein oder mehrere Stützplatten 2 können zentrisch auf einem Adapterblock 2⁽³⁾ montiert werden, wie z.B. gesteckt, geschraubt und/oder geklebt.

Zum Befestigen der Stützplatten 2 auf einem Adapterblock 2⁽³⁾ können die Stützplatten. 2 entsprechende Bohrungen aufweisen, welche auf den (die) Adapterblock 2⁽³⁾ abgestimmt sind.

Als Material für einen Adapterblock 2⁽³⁾ eignet sich Aluminium, Carbon, Holz, Balsaholz, Rohacell, insbesondere auch geschäumte Materialien.

Solche Adapterblöcke 2⁽³⁾ können auf einer Montageplatte 25 und/oder mittels eines Kreuztischs 24 sowie auf andere Weise in einer Mess- und/oder Untersuchungseinheit montiert werden.
in Fig. 7 ist ferner gut zu erkennen, wie vielfältig die Anlageelemente 14, 14', 14", 14⁽³⁾ gestaltet sein können.

In Fig. 7 oben rechts ist eine weitere Verwendungsart für Anlageelemente 14, 14' dargestellt, um ein oder mehrere, zu untersuchende Messobjekte 3⁽³⁾ zu fixieren oder zu spannen. Zu sehen ist ein Anlageelement 14 mit einer runden Gestalt und einem aussermittigen Einsteckloch 29, d.h. mit einer exzentrisch zu dem Mittelpunkt der zylindrischen Umfangsfläche angeordneten Ausnehmung 29.

Durch Drehen des scheibenförmigen Anlageelements 14 um einen in das Einsteckloch 29 eingesteckten Schaftkörper 19 kann der Abstand zu dem Messobjekt 3⁽³⁾ verändert werden, und auf diese Weise können Messobjekte 3, 3', 3", 3⁽³⁾ mit unterschiedlichen Abmessungen festgelegt bzw. festgespannt werden.

Obzwar die Anlageelemente 14, 14', 14", 14⁽³⁾ allesamt eine vergleichbare Grundstruktur aufweisen mit je einem scheibenförmigen Abschnitt 17, 17", 17⁽³⁾, so kann doch der jeweilige Umfang 18 völlig unterschiedliche Geometrien aufweisen: Während das rotationssymmetische Anlageelement 14 eine zylindrische Mantelfläche aufweist, also einen kreisförmigen Umfang 18, so weist der Umfang 18 bei den langgestreckten Anlageelementen 14", 14⁽³⁾ eine mehreckige Kontur auf ähnlich einem Prisma.

Ferner können sich die Anlageelemente 14, 14', 14", 14⁽³⁾ auch durch die Anzahl ihrer Schäfte 19 unterscheiden: Während das rotationssymmetische Anlageelement 14 nur einen Schaft 19 und ein Einsteckloch 29 aufweist, so verfügen die langgestreckten Anlageelementen 14", 14⁽³⁾ jeweils über mehrere Schäfte 19 und/oder Einstecklöcher 29", 29⁽³⁾, welche für ihre Fixierungsfunktion auf die Einstecklöcher 7, 7' der Stützeinheit 2, 2' hinsichtlich ihrer Durchmesser und Lochabstände abgestimmt sein sollten bzw. müssen.

Von Vorteil ist es, wenn die Einstecklöcher 29, 29', 29", 29⁽³⁾ in ihrem Durchmesser immer etwas kleiner sind als der Durchmesser des jeweiligen Einsteckschaftes 19. Dadurch wird eine ständige Klemmwirkung erzeugt, d.h., eine Reibkraft zwischen beiden Elementen.

Diese Klemmwirkung sorgt für einen spielfreien Kontakt zwischen den Stützelementen 2, 2' und den Einsteckschäften 19, 19', was für eine präzise Untersuchung der Messobjekte 3, 3', 3", 3⁽³⁾ sehr wichtig, ja geradezu eine Vorraussetzung ist.

Reicht diese Klemmwirkung bzw. Reibungskraft nicht aus, so können die Einstecklöcher 7, 7', 29 auch als Schraubengewinde ausgeführt sein, in welche anstelle von Einsteckschäften 19 dann Schrauben oder sonstige Körper mit einem Außengewinde eingeschraubt werden können. Mit dieser Technik können auch die Anlegeelemente 14 angebracht werden.

Ein Vorteil von kleineren Einstecklöchern 7, 7', 29 ist es, den hierdurch entstehenden Reibschluss zum Halten zu nutzen.

Wie für die Stützelemente 2, so hat sich auch für die Anlageelemente 14 ein Material mit geringer Dichte bewährt, bspw. Aluminium, Carbon, Holz, Balsaholz, Rohacell und/oder geschäumte Materialien.

Die Verwendung von Rohcell für ein Anlageelement 14 begünstigt bzw. verstärkt dessen Haltekraft infolge der gegenseitigen Reibwirkung bzw. des erhöhten Reibwiderstandes von Rohacell aufeinander.

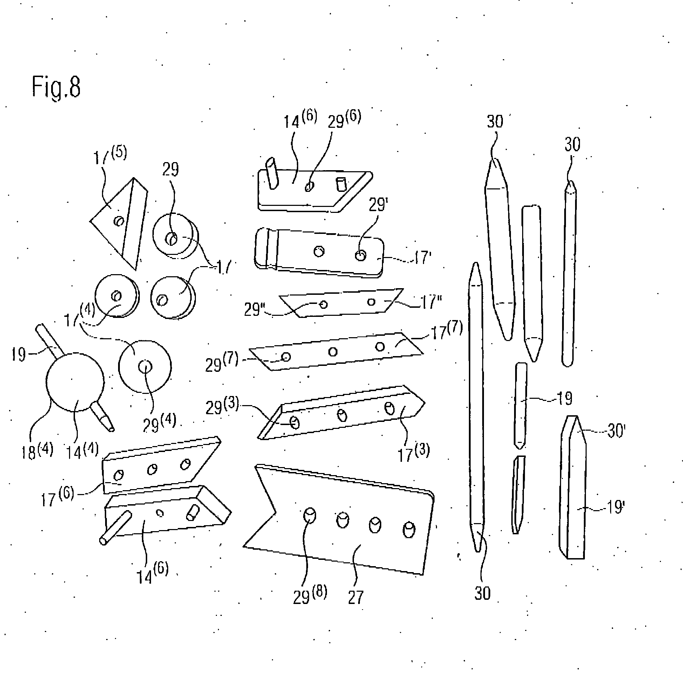

In Fig. 8 sind neben den bereits bekannten Anlageelementen 14, 14', 14", 14⁽³⁾ noch weitere Ausführungen dargestellt:
Man erkennt im linken oberen Bereich der Fig. 8 mehrere kreisscheibenförmige Abschnitte 17 für Anlageelemente, mit jeweils einer exzentrisch angeordneten Ausnehmung 29 zum Hindurchstecken je eines Schaftkörpers 19, wie er in Fig. 8 ganz rechts abgebildet ist. Die beiden dargestellten kreisscheibenförmige Abschnitte 17 unterscheiden sich hinsichtlich ihrer Dicke.

Ferner sind in Fig. 8 zwei ebenfalls kreisscheibenförmige Abschnitte 17⁽⁴⁾ mit ebenfalls unterschiedlicher Dicke erkennbar, wobei die dortigen Ausnehmungen 29⁽⁴⁾ jedoch konzentrisch angeordnet sind, die beiden Grundseiten der kreisscheibenförmige Abschnitte 17⁽⁴⁾ jedoch ebenfalls lotrecht durchsetzen.

Bei dem weiter dargestellten Anlageelement 14⁽⁴⁾ verläuft die Ausnehmung 29⁽⁴⁾ nicht lotrecht zur Grundebene desselben, sondern parallel dazu, so dass der Griff- und Einsteckschaft 19 dabei nicht koaxial zu dem Umfang 18⁽⁴⁾ verläuft, sondern radial zu der Symmetrieachse des Umfangs 18⁽⁴⁾.

In Fig 8 ganz links oben ist ein scheibenförmiger Abschnitt 17⁽⁵⁾ mit einer dreieckigen Grundfläche und einer entsprechend prismatischen Gestalt zu sehen, bevorzugt ebenfalls mit einer oder mehreren Ausnehmungen 29⁽⁵⁾ zum Hindurchstecken je eines Griff- und Einsteckschaftes 19.

Ferner sind einige, bevorzugt längliche scheibenförmige Elemente 17', 17" mit jeweils zwei Ausnehmungen 29', 29" zum Hindurchstecken je eines Griff- und Einsteckschaftes 19 erkennbar.

Außerdem sieht man in Fig. 8 mehrere langgestreckte Anlageelemente 14⁽⁶⁾ bzw. scheibenförmigen Elementen 17⁽³⁾, 17⁽⁶⁾, 17⁽⁷⁾ mit jeweils drei, bevorzugt in einer Reihe angeordneten Ausnehmungen 29⁽³⁾, 29⁽⁶⁾, 29⁽⁷⁾ zum Hindurchstecken je eines Griff- und Einsteckschaftes 19, wobei die Grundfläche sowohl trapezförmig, parallelogrammförmig, schiefwinklig oder sogar pfeilförmig ausgebildet sein kann.

Das scheibenförmige Element 27 verfügt sogar über vier Ausnehmungen 29⁽⁸⁾ zum Hindurchstecken je eines Griff- und Einsteckschaftes 19,

Wie in Fig. 8 ganz rechts dargestellt, können die Schaftelemente, insbesondere Anlagestäbe 19 unterschiedliche Durchmesser und Längen aufweisen, sie können an einem oder beiden Enden mit je einer konisch zulaufenden, ggf. abgerundeten Spitze 30 versehen sein.

Wie für die Haltestäbe 16, so hat sich auch für die Einsteckschäfte bzw. Anlagestäbe 19 ein Material mit geringer Dichte bewährt, insbesondere Aluminium, Carbon, Holz oder Balsaholz. Bei Verwendung von Rohacell und/oder geschäumte Materialien ist darauf zu achten, dass deren strukturelle Stabilität bzw. Festigkeit den jeweiligen Erfordernissen entspricht.

Die Schaftelemente 19 sollten bzw. müssen auf die verwendete Stützeinheit 2, 2' im Durchmesser abgestimmt sein.

Es gibt auch Schaftelemente 19' mit einer prismatischen Gestalt mit einem mehreckigen, bspw. rechteckigen oder quadratischen Querschnitt. Bei diesen Schaftelementen 19' kann eine Spitze 30' wahlweise durch zwei zueinander konvergierende Seiten gebildet sein, während die anderen beiden Seiten parallel zueinander verlaufen, so dass eine solche Spitze 30' eher einem Dachfirst ähnelt als einer tatsächlichen Spitze; es ist jedoch auch denkbar, alle vier Seiten zueinander konvergieren zu lassen, so dass sich eine tatsächliche Spitze ergibt, vergleichbar mit dem spitzen Schlußstein eines Obelisken.

**Bezugszeichenliste**

| | | | |
|---|---|---|---|
| 1 | Vorrichtung | 26 | Fixierungselement |
| 2 | Stützeinheit, Stütz-Platte-Bock | 27 | Adapter |
| 3 | Messobjekt | 28 | Stirnseite |
| 4 | Oberseite | 29 | Ausnehmung,Einsteckloch |
| 5 | Umfang | 30 | Spitze |
| 6 | Stirnkante | | |
| 7 | Einsteckloch | | |
| 8 | Grundzelle | | |
| 9 | Ecke | | |
| 10 | Linie | | |
| 11 | Linie | | |
| 12 | Kreislinie | | |
| 13 | Zentrum | | |
| 14 | Anlageelement | | |
| 15 | Aufsteckloch für Haltestäbe | | |
| 16 | Haltestab, Haltestift | | |
| 17 | scheibenförmiger Abschnitt | | |
| 18 | Umfang | | |
| 19 | Anlagestab, Schaft-Körper, Einsteckschaft | | |
| 20 | Grundseite | | |
| 21 | massives Teil | | |
| 22 | Grundplatte | | |
| 23 | Einstecköffnung der Grundplatte | | |
| 24 | Kreuztisch | | |
| 25 | Montageplatte, Halterung | | |

## Patentansprüche

1. Verfahren zur Untersuchung oder Vermessung eines Messobjektes (3) unter Verwendung einer Halte- und/oder Positioniervorrichtung (1) zum reproduzierbaren Positionieren eines zu messenden und/oder zu untersuchenden Messobjektes (3) an einer Mess- und/oder Untersuchungseinrichtung in einer gewünschten Relativposition gegenüber der Mess- und/oder Untersuchungseinrichtung, **dadurch gekennzeichnet, dass** die verwendete Halte- und/oder Positioniervorrichtung (1) umfasst:
a) wenigstens eine platten- oder blockförmige Stützeinheit (2) zur Abstützung des Messobjektes (3), bestehend aus einem Material mit einer spezifischen Dichte von 250 kg/m³ oder weniger, sowie
b) wenigstens ein vorzugsweise stabförmiges Anlageelement (14,19), woran das zu untersuchende Messobjekt (3) anlegbar ist,
wobei die Stützeinheit (2) an wenigstens einem ebenen Oberflächenbereich eine Mehrzahl von werksseitig vorgeformten, in einem Raster, insbesondere einem zweidimensionalen Raster angeordneten Einstecklöchern (7) oder Einsteckvertiefungen mit einem endlichen, lichten Querschnitt zum Einstecken des wenigstens einen vorzugsweise stabförmigen Anlageelements (14,19) oder eines eine Ausnehmung in einem Anlageelement (14) durchgreifenden Einsteckschaftes (19) aufweist,
wobei die Geometrien und Querschnitte der vorgeformten Einstecklöcher (7) oder Einsteckvertiefungen und eines darin einzusteckenden Anlageelements (14,19) oder Einsteckschaftes (19) derart aufeinander abgestimmt sind, dass sich zwischen beiden Elementen eine Klemmkraft einstellt,
wobei die Stützeinheit (2) zum Aufstecken an/auf Haltestäben (16) außerhalb des Rasters zusätzlich Aufstecklöcher (15) aufweist, welche die Stützeinheit (2) vollständig durchsetzen und zum Befestigen oder Aufstecken der block- oder plattenförmigen Stützeinheit (2) an/auf Haltestäben (16) oder zu ihrer Fixierung auf einem Adapter dienen.

2. Verfahren nach Anspruch 1, **dadurch gekennzeichnet, dass** die vorzugsweise block- oder plattenförmige Stützeinheit (2) auf wenigstens einer Grundseite wenigstens eine Markierung zum erleichterten Auffinden einer optimalen Position für das Messobjekt (3) aufweist.

3. Verfahren nach Anspruch 2, **dadurch gekennzeichnet, dass** die Markierung wenigstens einen Kreis (12) oder mehrere, zueinander konzentrische Kreise (12) aufweist, sowie ggf. einen von dem Mittelpunkt (13) des Kreises (12) oder der zueinander konzentrischen Kreise (12) ausgehenden Radialstrahl, vorzugsweise wobei ein oder mehrere Einstecklöcher auf einer kreisförmigen Markierung (12) angeordnet ist (sind).

4. Verfahren nach Anspruch 3, **dadurch gekennzeichnet, dass** die wenigstens eine kreisförmige Markierung (12) und/oder auf einer kreisförmigen Markierung (12) angeordnete Einstecklöcher derart angeordnet ist (sind), dass der Mittelpunkt dieser kreisförmigen Markierung (12) am Mess-Mittelpunkt der Mess- oder Untersuchungseinheit liegt oder sich an diese Position einstellen lässt.

5. Verfahren nach einem der vorhergehenden Ansprüche, **dadurch gekennzeichnet, dass** die Einstecklöcher (7) oder Einsteckvertiefungen in einem rechtwinkligen Raster angeordnet sind, oder in einem dreieckigen oder sechseckigen Raster, oder in einem zu einem Mittelpunkt (13) konzentrischen Raster.

6. Verfahren nach einem der vorhergehenden Ansprüche, **dadurch gekennzeichnet, dass** zwei oder mehrere Einstecklöcher (7) oder Einsteckvertiefungen durch eine linienförmige Markierung verbunden sind, beispielsweise durch eine oder mehrere gerade gestreckte oder kreisbogenförmige Linie(n) (10;11), vorzugsweise wobei mehrere, Markierungslinien (10;11) vorgesehen sind, welche parallel zueinander verlaufen und/oder sich schneiden, vorzugsweise unter rechten Winkeln.

7. Verfahren nach einem der vorhergehenden Ansprüche, **gekennzeichnet durch** einen Adapter zur Fixierung wenigstens einer block- oder plattenförmigen Stützeinheit (2), der
a) eine ebene Oberseite aufweist, die unter einem Winkel zwischen 1° bis 90° gegenüber der Horizontalen geneigt ist, und/oder
b) an oder in seiner Oberseite ein oder mehrere Elemente zur Befestigung von Haltestäben (16) aufweist, insbesondere derart, dass die daran festgelegten Haltestäbe (16) lotrecht zu der Oberseite des Adapters verlaufen.

8. Verfahren nach einem der vorhergehenden Ansprüche, **dadurch gekennzeichnet, dass** die Aufstecklöcher (15) derart bemessen sind, dass zwichen einem Haltestab (16) und dem von diesem durchgriffenen Aufsteckloch (15) eine ständige Klemmwirkung oder Reibungskraft existiert.

9. Verfahren nach Anspruch 8, **dadurch gekennzeichnet, dass** die Aufstecklöcher (15) lotrecht zu der Stützoberfläche der betreffenden Stützeinheit (2) verlaufen, oder unter einem gegenüber der Lotrechten an die Stützoberfläche der Stützeinheit (2) schrägen Neigungswinkel zwischen 1° und 89°, vorzugsweise einem Neigungswinkel zwischen 2° und 30°, insbesondere einem Neigungswinkel zwischen 5° und 20°.

10. Verfahren nach einem der vorhergehenden Ansprüche, **dadurch gekennzeichnet, dass** ein Ein- oder Aufsteckloch (7,15) einen mehreckigen Querschnitt aufweist und der Schaft (19) eines darin einsteckbaren Anlageelements (14) oder Haltestabs (16) einen kreisrunden Querschnitt, oder umgekehrt.

11. Verfahren nach einem der vorhergehenden Ansprüche, **dadurch gekennzeichnet, dass** ein Anlageelement (14) einen Anlagebereich aufweist sowie wenigstens eine Ausnehmung (29) zum Ein- oder Hindurchstecken eines Griff- und/oder Einsteckschaftes (19).

12. Verfahren nach einem der vorhergehenden Ansprüche, **dadurch gekennzeichnet, dass** ein Einsteckschaft oder Anlagestab oder Anlageelement (14) oder ein Haltestab (16)
a) aus einem Material besteht, dessen spezifische Dichte 1,5 kg/dm³ beträgt oder weniger, beispielsweise 1 kg/dm³ oder weniger, bevorzugt 0,6 kg/dm³ oder weniger, insbesondere 0,4 kg/dm³ oder weniger, und/oder
b) aus Balsaholz besteht, oder aus Kunststoff, beispielsweise aus einem kohlefaserverstärkten Kunststoff, einem Hartschaum wie Polystyrolschaum, insbesondere aus EPS oder XPS, Polyurethanschaum oder Polymethacrylimidschaum, oder aus Aluminium oder Aluminiumschaum.

13. Verfahren nach einem der vorhergehenden Ansprüche, **dadurch gekennzeichnet, dass** ein Einsteckschaft (19) oder ein Anlagestab (14) oder ein Haltestab (16) massiv hergestellt ist oder als Rohr.

14. Verfahren nach Anspruch 13, **dadurch gekennzeichnet, dass** ein Haltestab (16)
a) an seinem oberen Ende verjüngt ist, beispielsweise kegelförmig oder kegelstumpfförmig verjüngt, und/oder
b) an seinem unteren Ende mit einem Gewinde versehen ist, vorzugsweise mit einem Außengewinde oder mit einem Innengewinde.

15. Verfahren nach einem der vorhergehenden Ansprüche, **dadurch gekennzeichnet, dass** mehrere Haltestäbe (16) an einer gemeinsamen Grundplatte (22) oder an einem gemeinsamen Adapter festgelegt sind, vorzugsweise
a) wobei sie eingeschraubt, eingesteckt, eingeklebt oder eingegossen sind, und/oder
b) wobei sie untereinander parallel sind, und/oder
c) wobei sie in dem selben Raster und/oder in dem gleichen Abstand festgelegt sind, in welchem die Aufstecklöcher (15) in der wenigstens einen vorzugsweise block- oder plattenförmigen Stützeinheit (2) vorgesehen sind, und/oder
d) wobei sie in einer codierten Anordnung festgelegt sind, in welcher auch die Aufstecklöcher (15) in der vorzugsweise block- oder plattenförmigen Stützeinheit (2) vorgesehen sind, derart, dass ein Aufstecken nur in einer ganz bestimmten Relativausrichtung möglich ist.

## Claims

1. Method for examination or measurement of a measurement object (3) using a holding and/or positioning device (1) for reproducible positioning of a measurement object and/or of an object (3) to be examined at a measuring device at a measuring and/or examination device in a desired relative position with respect to the measuring and/or examination device, **characterized in that** the holding and/or positioning device (1) comprises:
a) at least one plate-shaped or block-shaped support unit (2) for supporting the measurement object (3), consisting of a material having a specific density of 250 kg/m³ or less, and
b) at least one preferably bar-shaped abutment element (14,19), at which the measurement object (3) can be abutted,
wherein the support unit (2) comprises, on at least one planar surface, a plurality of insertion holes (7) or recesses preformed by the manufacturer, which are arranged in a grid, particularly in a two-dimensional grid, and have finite clear cross-sections, for the insertion of at least one preferably bar-shaped abutment element (14,19) or of an insertion shaft (19) which extends through a recess of an abutment element (14),
wherein the geometries and cross-sections of the preformed insertion holes (7) or insertion recesses and of an abutment element (14,19) or insertion shaft (19) for insertion therein complement each other in such a way that a clamping force results between the two elements,
wherein the support unit (2) comprises additional plug-in holes (15) outside the grid for mounting on/at supporting rods (16), which extend through the support unit (2) entirely and which serve for fastening or mounting of the plate- or block-shaped support unit (2) on/at the supporting rods (16) or for fixing them at an adapter.

2. Method according to claim 1, **characterized in that** the preferably block- or plate-shaped support unit (2) comprises at least one marking on at least one basic side for facilitating the location of an optimal position for the measurement object (3).

3. Method according to claim 2, **characterized in that** said marking comprises at least one circle (12) or several circles (12) which are arranged concentrically to each other, and, where necessary, one radial ray extending from the center (13) of the circle (12) or of the concentrically arranged circles (12), preferably whereby one ore more insertion holes is/are arranged on a circular marking (12).

4. Method according to claim 3, **characterized in that** the at least one marking (12) and/or insertion holes arranged on a circular marking (12) is (are) positioned in such a way, that the center of the circle (12) is positioned at the measuring center of the measurement and examination unit or can be adjusted to this position.

5. Method according to one of the preceding claims, **characterized in that** the insertion holes (7) or the plug-in holes are arranged in an orthogonal grid, or in a triangular grid or in a hexagonal grid, or in a grid which is concentrical to a center point (13).

6. Method according to one of the preceding claims, **characterized in that** two or more insertion holes (7) or plug-in holes are connected together by a linear marking, for example by one or more straight or circular line(s) (10;11), preferably wherein several marking lines (10;11) are provided, which extend parallel to each other and/or intersect each other, preferably at right angles.

7. Method according to one of the preceding claims, **characterized by** an adapter for fixation of at least one block- or plate-shaped support unit (2), which
a) has a flat top surface, which is inclined at an angle between 1° and 90° with respect to the horizontal plane, and/or
b) comprises one or more elements for fastening of supporting rods (16) on or at its top surface, especially in such a way that the attached supporting rods (16) are perpendicular to the top surface of the adapter.

8. Method according to one of the preceding claims, **characterized in that** the plug-in holes (15) are dimensioned in such a way that a permanent clamping effect or a friction force exists between a supporting rod (16) and a plug-in hole (15) penetrated by it.

9. Method according to claim 8, **characterized in that** the plug-in holes (15) extend perpendicularly to the supporting surface of the respective support unit (2), or are inclined at an inclination angle between 1° and 89° with respect to a line perpendicular to the support surface of the support unit (2), preferably having an inclination angle between 2° and 30°, especially an inclination angle between 5° and 20°.

10. Method according to one of the preceding claims, **characterized in that** an insertion or plug-in hole (7,15) has a polygonal cross-section and the shaft (19) of an abutment element (14) or a supporting rod (16) insertable therein has a circular cross-section or vice-versa.

11. Method according to one of the preceding claims, **characterized in that** an abutment element (14) comprises an abutment area and at least one recess (29) for insertion or plugging through of a handle element or of an insertion shaft (19).

12. Method according to one of the preceding claims, **characterized in that** an insertion shaft or an abutment rod or an abutment element (14) or a supporting rod (16)
a) consists of a material having specific density of 1,5 kg/m³ or less, for example 1 kg/m³ or less, preferably 0,6 kg/m³ or less, especially 0,4 kg/m³ or less, and/or
b) consists of balsa wood or of plastic, for example of carbon fiber reinforced plastic, or of a rigid foam like polystyrene foam, especially of EPS or XPS, or of polyurethane foam or polymethacrylimide foam, or of aluminum or aluminum foam.

13. Method according to one of the preceding claims, **characterized in that** an insertion shaft (19) or an abutment element (14) or a supporting rod (16) is produced as a solid or as a tube.

14. Method according to claim 13, **characterized in that** a supporting rod (16)
a) tapers at its upper end, for example in the form of a conical tapering or a truncated-cone tapering, and/or
b) comprises a thread at its lower end, preferably in the form of an external thread or an internal thread.

15. Method according to one of the preceding claims, **characterized in that** several supporting rods (16) are fixed to a common base plate (22) or to a common adapter, preferably
a) wherein they are screwed, inserted, glued or molded therein, and/or
b) wherein they are parallel to each other, and/or
c) wherein they are fixed in the same grid and/or in the same distance, in which the plug-in holes (15) are provided in the at least one block- or plate-shaped support unit (2), and/or
d) wherein they are fixed in a coded arrangement, in which the plug-in holes (15) are also arranged in the block- or plate-shaped support unit (2), so that a slipping-on is only possible at a particular relative orientation.

## Revendications

1. Procédé d'analyse ou de mesure d'un objet de mesure (3) à l'aide d'un dispositif de retenue et/ou de positionnement (1) permettant un positionnement reproductible d'un objet de mesure (3) à mesurer et/ou à analyser sur un appareil de mesure et/ou d'analyse dans une position relative souhaitée par rapport à l'appareil de mesure et/ou d'analyse, **caractérisé en ce que** le dispositif de retenue et/ou de positionnement (1) utilisé comporte :
a) au moins une unité de support (2) en forme de bloc ou de plaque pour supporter l'objet de mesure (3), constituée d'un matériau d'une densité spécifique égale ou inférieure à 250 kg/m³, ainsi que
b) au moins un élément de contact (14, 19) de préférence en forme de barre, sur lequel l'objet de mesure (3) à analyser peut être appliqué,
**en ce que** l'unité de support (2) au niveau d'au moins une zone de surface plane comporte une pluralité de trous d'introduction (7) ou cavités d'introduction préformés en usine, disposés dans une grille, en particulier dans une grille bidimensionnelle, présentant une section transversale intérieure finie destinée à introduire au moins ledit élément de contact (14, 19) de préférence en forme de barre ou une tige d'introduction (19) traversant une cavité dans un élément de contact (14),
**en ce que** les géométries et sections transversales des trous d'introduction (7) ou cavités d'introduction préformés et d'un élément de contact (14, 19) ou tige d'introduction (19) à y introduire sont adaptées les unes aux autres de telle sorte qu'une force de serrage se règle entre les deux éléments,
**en ce que** l'unité de support (2) comporte en outre des trous d'enfichage (15) pour l'enfichage au niveau/sur des barres de retenue (16) en dehors de la grille, qui traversent entièrement l'unité de support (2) et servent à la fixation ou l'enfichage de l'unité de support (2) en forme de bloc ou de plaque au niveau/sur des barres de retenue (16) ou à sa fixation sur un adaptateur.

2. Procédé selon la revendication 1, **caractérisé en ce que** l'unité de support (2) de préférence en forme de bloc ou de plaque comporte sur au moins un côté de base au moins un marquage pour détecter plus facilement une position optimale pour l'objet de mesure (3).

3. Procédé selon la revendication 2, **caractérisé en ce que** le marquage présente au moins un cercle (12) ou plusieurs cercles (12) concentriques l'un par rapport à l'autre, ainsi que le cas échéant un rayon radial partant du centre (13) du cercle (12) ou des cercles (12) concentriques l'un par rapport à l'autre, de préférence **en ce qu'**un ou plusieurs trous d'introduction est (sont) disposé(s) sur un marquage circulaire (12).

4. Procédé selon la revendication 3, **caractérisé en ce qu'**au moins ledit marquage circulaire (12) et/ou les trous d'introduction disposés sur un marquage circulaire (12) est (sont) disposé(s) de telle sorte que le centre de ce marquage circulaire (12) se trouve sur le centre de mesure de l'unité de mesure ou d'analyse ou qu'il peut être réglé sur cette position.

5. Procédé selon l'une des revendications précédentes, **caractérisé en ce que** les trous d'introduction (7) ou cavités d'introduction sont disposés dans une grille rectangulaire, ou dans une grille triangulaire ou hexagonale, ou dans une grille concentrique par rapport à un centre (13).

6. Procédé selon l'une des revendications précédentes, **caractérisé en ce que** deux ou plusieurs trous d'introduction (7) ou cavités d'introduction sont reliés par un marquage linéaire, par exemple par une ou plusieurs ligne(s) (10 ; 11) droite(s) ou en forme d'arc de cercle, de préférence **en ce que** plusieurs lignes de marquage (10 ; 11) sont prévues, lesquelles sont parallèles l'une par rapport à l'autre et/ou se rencontrent, de préférence à angles droits.

7. Procédé selon l'une des revendications précédentes, **caractérisé par** un adaptateur servant à la fixation d'au moins une unité de support (2) en forme de bloc ou de plaque, qui
a) présente une face supérieure plane, qui est inclinée à un angle compris entre 1° à 90° par rapport à l'horizontale, et/ou
b) présente au niveau ou dans sa face supérieure un ou plusieurs éléments pour la fixation de barres de retenue (16), en particulier de telle sorte que les barres de retenue (16) qui y sont fixées sont per-pendiculaires à la face supérieure de l'adaptateur.

8. Procédé selon l'une des revendications précédentes, **caractérisé en ce que** les trous d'enfichage (15) sont dimensionnés de telle sorte qu'il existe un effet desserrage permanent ou une force de frottement entre une barre de retenue (16) et le trou d'enfichage (15) traversé par celle-ci.

9. Procédé selon la revendication 8, **caractérisé en ce que** les trous d'enfichage (15) sont perpendiculaires à la surface de support de l'unité de support (2) correspondante, ou à un angle d'inclinaison compris entre 1° et 89° incliné par rapport à la perpendiculaire au niveau de la surface de support de l'unité de support (2), de préférence à un angle d'inclinaison compris entre 2° et 30°, en particulier à un angle d'inclinaison compris entre 5° et 20°.

10. Procédé selon l'une des revendications précédentes, **caractérisé en ce qu'**un trous d'introduction ou d'enfichage (7, 15) présente une section transversale polygonale et la tige (19) d'un élément de contact (14) pouvant y être introduit ou barre de retenue (16) une section transversale orbiculaire, ou inversement.

11. Procédé selon l'une des revendications précédentes, **caractérisé en ce qu'**une
élément de contact (14) présente une zone de contact ainsi qu'au moins un évidement (29) servant à introduire ou faire passer une tige de poignée et/ou une tige d'introduction (19).

12. Procédé selon l'une des revendications précédentes, **caractérisé en ce qu'**une tige d'introduction ou barre de contact ou élément de contact (14) ou une barre de retenue (16)
a) est constitué d'un matériau dont la densité spécifique est égale ou inférieure à 1,5 kg/dm³, par exemple égale ou inférieure à 1 kg/dm³, de préférence égale ou inférieure à 0,6 kg/dm³, en particulier égale ou inférieure à 0,4 kg/dm³, et/ou
b) est constitué de bois de balsa ou de matière plastique, par exemple d'une matière plastique renforcée de fibres de carbone, d'une mousse rigide comme une mousse de polystyrène, en particulier de EPS ou XPS, de mousse de polyuréthane ou mousse de polymé- thacrylimide, ou d'aluminium ou mousse d'aluminium.

13. Procédé selon l'une des revendications précédentes, **caractérisé en ce qu'**une tige d'introduction (19) ou une barre de contact (14) ou une barre de retenue (16) est fabriquée en dur ou sous forme de tube.

14. Procédé selon la revendication 13, **caractérisé en ce qu'**une barre de retenue (16)
a) est rétrécie au niveau de son extrémité supérieure, par exemple rétrécie en forme conique ou en forme de cône tronqué, et/ou
b) comporte au niveau de son extrémité inférieure un filetage, de pré-férence un filetage mâle ou un filetage femelle.

15. Procédé selon l'une des revendications précédentes, **caractérisé en ce que** plusieurs barres de retenue (16) sont fixées sur une plaque de base (22) commune ou sur un adaptateur commun, de préférence
a) **en ce qu'**elles sont vissées, introduites, collées ou coulées, et/ou
b) **en ce qu'**elles sont parallèles l'une par rapport à l'autre, et/ou
c) **en ce qu'**elles sont fixées dans la même grille et/ou à même intervalle dans lequel/laquelle les trous d'enfichage (15) sont prévus dans au moins ladite unité de support (2) de préférence en forme de bloc ou de plaque, et/ou
d) **en ce qu'**elles sont fixées dans un ensemble codé, dans lequel également les trous d'enfichage (15) sont prévus dans l'unité de support (2) en forme de bloc ou de plaque de telle sorte qu'un enfi- chage n'est possible que dans un alignement relatif bien défini.
